# EUROPEAN PATENT APPLICATION

(11) **EP 4 386 924 A1**
(43) Date of publication of application: **19.06.2024**
(21) Application number: 22870018.3
(22) Date of filing: 14.09.2022
(51) Int. Cl.: H01M 10/0567, H01M 10/052, H01M 10/0569

(54) **NON-AQUEOUS SOLUTION, RETENTION METHOD, AND NON-AQUEOUS BATTERY**

(30) Priority: 17.09.2021 JP 2021152601
(71) Applicant: Central Glass Co., Ltd., Yamaguchi 755-0001 (JP)
(72) Inventor: MORINAKA, Takayoshi, Tokyo 101-0054 (JP); NAKAHARA, Keita, Ube-shi, Yamaguchi 755-0001 (JP); IWASAKI, Susumu, Ube-shi, Yamaguchi 755-0001 (JP); TAKAHASHI, Mikihiro, Ube-shi, Yamaguchi 755-0001 (JP)
(74) Representative: Manitz Finsterwald Patent- und Rechtsanwaltspartnerschaft mbB
(86) International application number: PCT/JP2022/034484
(87) International publication number: WO 2023/042871

(57) **Abstract**

The present disclosure provides a nonaqueous solution in contact with austenitic stainless steel, the nonaqueous solution containing a nonaqueous solvent and an imidic acid or imidic acid salt represented by a specific structure, in which a content of the nonaqueous solvent having a dielectric constant (at 25°C) of 10 or less in the nonaqueous solvent is 50% by volume to 100% by volume.

## Description

### TECHNICAL FIELD

The present disclosure relates to a nonaqueous solution, a holding method, and a nonaqueous battery.

### BACKGROUND ART

Patent Literature 1 discloses a lithium ion secondary battery including: an electrode mixture layer that includes an electrode active material and an organic ferroelectric having a dielectric constant of 25 or more; and an electrolyte solution that contains lithium bis(fluorosulfonyl)imide and a nonaqueous solvent, in which a content of the organic ferroelectric is 0.5 parts by mass or more to 10 parts by mass or less with respect to 100 parts by mass of the electrode active material, and a proportion of a high-polarity solvent having a dielectric constant of 10 or more in the nonaqueous solvent is 10% by volume or less, so that output characteristics are improved.

On the other hand, it is known that various imidic acids having a phosphoryl group such as bis(phosphoryl)imide (HN(POX₂)₂) and asymmetric phosphorylimide (HN(POX₂)(SO₂X)), and metal salts and onium salts thereof have recently become useful substances as anion sources for ionic conductive materials and ionic liquids, electrolytes and additives for a nonaqueous electrolyte solution battery such as a lithium ion battery, a lithium battery, a lithium ion capacitor, and a sodium ion battery (Patent Literatures 2 and 3).

Non Patent Literature 1 describes a method for synthesizing a [bis(difluorophosphoryl)imide]lithium salt.

### CITATION LIST

### PATENT LITERATURE

Patent Literature 1: JP2016-164832A
Patent Literature 2: JP2010-254554A
Patent Literature 3: CN102617414A

### NON PATENT LITERATURE

Non Patent Literature 1: Z. Anorg. Allg. Chem. 412(1), 65-70 (1975)

### SUMMARY OF INVENTION

### TECHNICAL PROBLEM

The inventors discovered that a nonaqueous solution or a nonaqueous electrolyte solution of an imidic acid or imidic acid salt with a specific structure having a phosphoryl group easily causes corrosion when the solution comes into contact with austenitic stainless steel, depending on solvent species.

Therefore, a problem of the present disclosure is to provide a nonaqueous solution that does not easily cause corrosion even when the nonaqueous solution comes into contact with austenitic stainless steel, a holding method thereof, and a nonaqueous battery in which corrosion to a wetted member even containing the austenitic stainless steel hardly occurs.

### SOLUTION TO PROBLEM

As a result of intensive studies in view of such a problem, the present inventors have discovered that a nonaqueous solution or a nonaqueous electrolyte solution of an imidic acid or an imidic acid salt with a specific structure having a phosphoryl group can suppress corrosion of austenitic stainless steel caused by contacting with the nonaqueous solution or the nonaqueous electrolyte solution, when the nonaqueous solution or the nonaqueous electrolyte solution contains a predetermined amount of the specific solvent species. This has led to the present disclosure.

That is, the present disclosure includes the following embodiments.
[1] A nonaqueous solution, containing a nonaqueous solvent and an imidic acid or imidic acid salt represented by the following Formula [1], in which the nonaqueous solution is in contact with austenitic stainless steel and a content of the nonaqueous solvent having a dielectric constant (at 25°C) of 10 or less in the nonaqueous solvent is 50% by volume to 100% by volume. 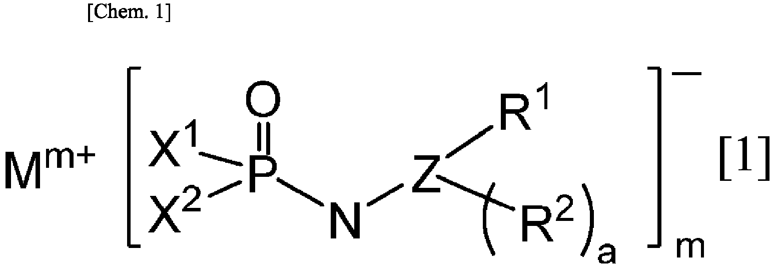
   [In Formula [1], X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group.
   Z represents -P(=O)<, -S(=O)z-, or -C(=O)-. a is 0 or 1. When Z represents -P(=O)<, a is 1, and when Z represents -S(=O)₂- or -C(=O)-, a is 0.
   R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group.
   M^{m+} represents a proton, an alkali metal cation, an alkaline earth metal cation, or an onium cation, and m represents a valence of the cation.]
[2] The nonaqueous solution according to [1], in which the nonaqueous solvent having the dielectric constant (at 25°C) of 10 or less is at least one selected from the group consisting of ethyl methyl carbonate, dimethyl carbonate, diethyl carbonate, methyl acetate, ethyl acetate, ethyl propionate, 1,2-dimethoxyethane, and diethylene glycol dimethyl ether.
[3] The nonaqueous solution according to [1] or [2], in which a concentration of the imidic acid or imidic acid salt represented by Formula [1] in the nonaqueous solution is 1% by mass to 90% by mass.
[4] A holding method, including: holding a nonaqueous solution in a wetted member containing austenitic stainless steel, in which the nonaqueous solution contains a nonaqueous solvent and an imidic acid or imidic acid salt represented by the following Formula [1], and a content of the nonaqueous solvent having a dielectric constant (at 25°C) of 10 or less in the nonaqueous solvent is 50% by volume to 100% by volume. 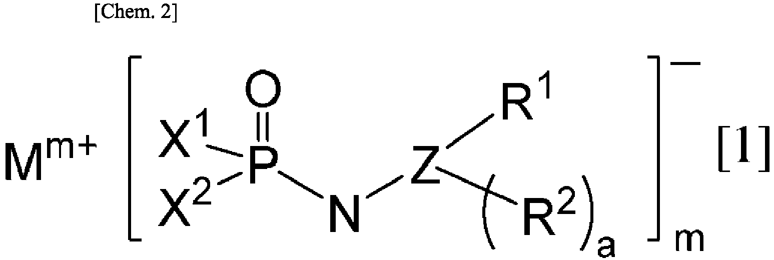
   [In Formula [1], X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group.
   Z represents -P(=O)<, -S(=O)z-, or -C(=O)-. a is 0 or 1. When Z represents -P(=O)<, a is 1, and when Z represents -S(=O)₂- or -C(=O)-, a is 0.
   R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group.
   M^{m+} represents a proton, an alkali metal cation, an alkaline earth metal cation, or an onium cation, and m represents a valence of the cation.]
[5] The holding method according to [4], in which the nonaqueous solvent having the dielectric constant (at 25°C) of 10 or less is at least one selected from the group consisting of ethyl methyl carbonate, dimethyl carbonate, diethyl carbonate, methyl acetate, ethyl acetate, ethyl propionate, 1,2-dimethoxyethane, and diethylene glycol dimethyl ether.
[6] The holding method according to [4] or [5], in which a concentration of the imidic acid or imidic acid salt represented by Formula [1] in the nonaqueous solution is 1% by mass to 90% by mass.
[7] A nonaqueous battery, including: a wetted member containing austenitic stainless steel; and a nonaqueous electrolyte solution in contact with the wetted member, in which the nonaqueous electrolyte solution contains a nonaqueous solvent and an imidic acid or imidic acid salt represented by the following Formula [1], and a content of the nonaqueous solvent having a dielectric constant (at 25°C) of 10 or less in the nonaqueous solvent is 50% by volume to 100% by volume. 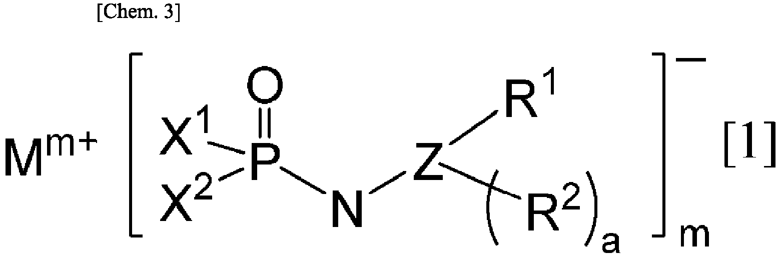
   [In Formula [1], X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group.
   Z represents -P(=O)<, -S(=O)z-, or -C(=O)-. a is 0 or 1. When Z represents -P(=O)<, a is 1, and when Z represents -S(=O)₂- or -C(=O)-, a is 0.
   R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group.
   M^{m+} represents a proton, an alkali metal cation, an alkaline earth metal cation, or an onium cation, and m represents a valence of the cation.]
[8] The nonaqueous battery according to [7], in which the nonaqueous solvent having the dielectric constant (at 25°C) of 10 or less is at least one selected from the group consisting of ethyl methyl carbonate, dimethyl carbonate, diethyl carbonate, methyl acetate, ethyl acetate, ethyl propionate, 1,2-dimethoxyethane, and diethylene glycol dimethyl ether.
[9] The nonaqueous battery according to [7] or [8], in which a concentration of the imidic acid or imidic acid salt represented by Formula [1] in the nonaqueous electrolyte solution is 0.1% by mass to 10% by mass.

### ADVANTAGEOUS EFFECTS OF INVENTION

The present disclosure allows for providing a nonaqueous solution that does not easily cause corrosion even when the nonaqueous solution comes into contact with austenitic stainless steel, a holding method thereof, and a nonaqueous battery in which corrosion of a wetted member even containing the austenitic stainless steel hardly occurs.

### DESCRIPTION OF EMBODIMENTS

Hereinafter, the present disclosure will be described in detail, but the description of the constituent elements described below is an example of an embodiment of the present disclosure, and the present disclosure is not limited to these specific contents. Various modifications can be made within the scope of the gist.

A first aspect of the present disclosure relates to a nonaqueous solution in contact with austenitic stainless steel, containing a nonaqueous solvent and an imidic acid or imidic acid salt represented by the following Formula [1], in which a content of the nonaqueous solvent having a dielectric constant (at 25°C) of 10 or less in the nonaqueous solvent is 50% by volume to 100% by volume. 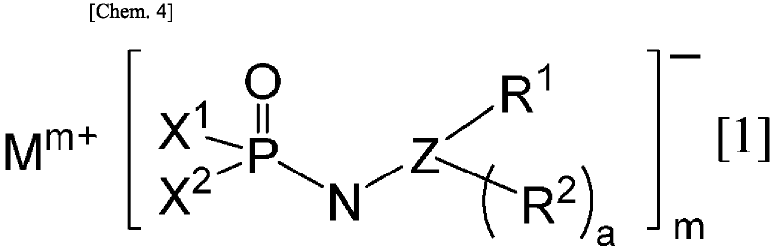
[In Formula [1], X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group.
Z represents -P(=O)<, -S(=O)z-, or -C(=O)-. a is 0 or 1. When Z represents -P(=O)<, a is 1, and when Z represents -S(=O)₂- or -C(=O)-, a is 0.
R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group.
M^{m+} represents a proton, an alkali metal cation, an alkaline earth metal cation, or an onium cation, and m represents a valence of the cation.]

A second aspect of the present disclosure relates to a holding method for holding a nonaqueous solution in a wetted member containing austenitic stainless steel, in which the nonaqueous solution contains a nonaqueous solvent and an imidic acid or imidic acid salt represented by the above Formula [1], and a content of the nonaqueous solvent having a dielectric constant (at 25°C) of 10 or less in the nonaqueous solvent is 50% by volume to 100% by volume.

In addition, a third aspect of the present disclosure relates to a nonaqueous battery, including: a wetted member containing austenitic stainless steel; and a nonaqueous electrolyte solution in contact with the wetted member, in which the nonaqueous electrolyte solution contains a nonaqueous solvent and an imidic acid or imidic acid salt represented by the following Formula [1], and a content of the nonaqueous solvent having a dielectric constant (at 25°C) of 10 or less in the nonaqueous solvent is 50% by volume to 100% by volume.

The nonaqueous solution according to the first aspect of the present disclosure contains the nonaqueous solvent and the imidic acid or imidic acid salt represented by the above Formula [1], and the content of the nonaqueous solvent having the dielectric constant (at 25°C) of 10 or less in the nonaqueous solvent is 50% by volume to 100% by volume.

In the nonaqueous battery according to the third aspect of the present disclosure, the nonaqueous electrolyte solution contains the nonaqueous solvent and the imidic acid or imidic acid salt represented by the above Formula [1], and the content of the nonaqueous solvent having the dielectric constant (at 25°C) of 10 or less in the nonaqueous solvent is 50% by volume to 100% by volume.

In the holding method according to the second aspect of the present disclosure, the nonaqueous solution contains the nonaqueous solvent and the imidic acid or imidic acid salt represented by the above Formula [1], and the content of the nonaqueous solvent having the dielectric constant (at 25°C) of 10 or less in the nonaqueous solvent is 50% by volume to 100% by volume.

According to such configurations, even if the solution comes into contact with the austenitic stainless steel, corrosion to the austenitic stainless steel can be suppressed. Reasons are not clear and are presumed to be as follows.

As described above, in the nonaqueous solution or the nonaqueous electrolyte solution, the content of the solvent having the dielectric constant of 10 or less in the nonaqueous solvent is 50% by volume to 100% by volume, so that dissociation of an imide anion and a metal cation in Formula [1] can be suppressed, and a corrosion reaction caused by the imide anion with respect to the austenitic stainless steel can be suppressed.

Hereinafter, the nonaqueous solution according to the first aspect of the present disclosure will be described.

### [Nonaqueous Solution]

The nonaqueous solution contains a nonaqueous solvent and an imidic acid or imidic acid salt represented by Formula [1].

### (Imidic acid or imidic acid salt represented by Formula [1])

The imidic acid or imidic acid salt represented by Formula [1] (hereinafter, also referred to as "compound represented by Formula [1]") will be described.

When X¹ and X² each independently represent an alkoxy group having 1 to 10 carbon atoms as an organic group, the alkoxy group having 1 to 10 carbon atoms is not limited, but may be linear or branched.

The linear alkoxy group is preferably an alkoxy group having 1 to 6 carbon atoms, and more preferably an alkoxy group having 1 to 3 carbon atoms.

The branched alkoxy group is preferably an alkoxy group having 3 to 10 carbon atoms, and more preferably an alkoxy group having 3 to 6 carbon atoms.

When X¹ and X² each independently represent an alkenyloxy group having 2 to 10 carbon atoms as an organic group, the alkenyloxy group having 2 to 10 carbon atoms is not limited, but may be linear or branched, preferably an alkenyloxy group having 2 to 6 carbon atoms, and more preferably an alkenyloxy group having 2 to 3 carbon atoms.

When X¹ and X² each independently represent an alkynyloxy group having 2 to 10 carbon atoms as an organic group, the alkynyloxy group having 2 to 10 carbon atoms is not limited, but may be linear or branched, preferably an alkynyloxy group having 2 to 6 carbon atoms, and more preferably an alkynyloxy group having 2 to 3 carbon atoms. Specific examples include a propargyloxy group.

When X¹ and X² each independently represent a cycloalkoxy group having 3 to 10 carbon atoms as an organic group, the cycloalkoxy group having 3 to 10 carbon atoms is not limited, but may be monocyclic or polycyclic, preferably a cycloalkoxy group having 3 to 8 carbon atoms, and more preferably a cycloalkoxy group having 3 to 6 carbon atoms.

When X¹ and X² each independently represent a cycloalkenyloxy group having 3 to 10 carbon atoms as an organic group, the cycloalkenyloxy group having 3 to 10 carbon atoms is not limited, but may be monocyclic or polycyclic, preferably a cycloalkenyloxy group having 3 to 8 carbon atoms, and more preferably a cycloalkenyloxy group having 3 to 6 carbon atoms.

When X¹ and X² each independently represent an aryloxy group having 6 to 10 carbon atoms as an organic group, the aryloxy group having 6 to 10 carbon atoms is not limited, but may be monocyclic or polycyclic, and includes a phenyloxy group, a naphthyloxy group, and the like.

When X¹ and X² each independently represent an organic group selected from the above group, at least one selected from a fluorine atom, an oxygen atom, and an unsaturated bond may be present in the organic group.

A description that "when a fluorine atom is present in the organic group" specifically refers to the above group in which the hydrogen atom is substituted with a fluorine atom.

For example, a description that "when an oxygen atom is present in the organic group" specifically refers to a group in which "-O-" (ether bond) is interposed between carbon atoms of the above group.

X¹ and X² are preferably a chlorine atom, a fluorine atom, or an alkynyloxy group having 2 to 10 carbon atoms.

Z represents -P(=O)<, -S(=O)z-, or -C(=O)-. a is 0 or 1. When Z represents -P(=O)<, a is 1, and when Z represents -S(=O)₂- or -C(=O)-, a is 0.

When Z represents -P(=O)<, Z represents a linking group with a valence of 3, and when Z represents - S(=O)₂- or -C(=O)-, Z represents a linking group with a valence of 2.

Z preferably represents -P(=O)< or -S(=O)₂-.

When R¹ and R² each independently represent an alkyl group having 1 to 10 carbon atoms as an organic group, the alkyl group having 1 to 10 carbon atoms is not limited, but may be linear or branched.

The linear alkyl group is preferably an alkyl group having 1 to 6 carbon atoms, and more preferably an alkyl group having 1 to 3 carbon atoms.

The branched alkyl group is preferably an alkyl group having 3 to 10 carbon atoms, and more preferably an alkyl group having 3 to 6 carbon atoms.

When R¹ and R² each independently represent an alkenyl group having 2 to 10 carbon atoms as an organic group, the alkenyl group having 2 to 10 carbon atoms is not limited, but may be linear or branched, preferably an alkenyl group having 2 to 6 carbon atoms, and more preferably an alkenyl group having 2 to 3 carbon atoms.

When R¹ and R² each independently represent an alkynyl group having 2 to 10 carbon atoms as an organic group, the alkynyl group having 2 to 10 carbon atoms is not limited, but may be linear or branched, preferably an alkynyl group having 2 to 6 carbon atoms, and more preferably an alkynyl group having 2 to 3 carbon atoms.

When R¹ and R² each independently represent a cycloalkyl group having 3 to 10 carbon atoms as an organic group, the cycloalkyl group having 3 to 10 carbon atoms is not limited, but may be monocyclic or polycyclic, preferably a cycloalkyl group having 3 to 8 carbon atoms, and more preferably a cycloalkyl group having 3 to 6 carbon atoms.

When R¹ and R² each independently represent a cycloalkenyl group having 3 to 10 carbon atoms as an organic group, the cycloalkenyl group having 3 to 10 carbon atoms is not limited, but may be monocyclic or polycyclic, preferably a cycloalkenyl group having 3 to 8 carbon atoms, and more preferably a cycloalkenyl group having 3 to 6 carbon atoms.

When R¹ and R² each independently represent an aryl group having 6 to 10 carbon atoms as an organic group, the aryl group having 6 to 10 carbon atoms is not limited, but may be monocyclic or polycyclic, and examples thereof include a phenyl group, and a naphthyl group.

When R¹ and R² each independently represent an alkoxy group having 1 to 10 carbon atoms as an organic group, examples of the alkoxy group having 1 to 10 carbon atoms are the same as the alkoxy group having 1 to 10 carbon atoms when the above X¹ and X² each independently represent the alkoxy group having 1 to 10 carbon atoms as an organic group, and preferred ranges are also the same.

When R¹ and R² each independently represent an alkenyloxy group having 2 to 10 carbon atoms as an organic group, examples of the alkenyloxy group having 2 to 10 carbon atoms are the same as the alkenyloxy group having 2 to 10 carbon atoms when the above X¹ and X² each independently represent the alkenyloxy group having 2 to 10 carbon atoms as an organic group, and preferred ranges are also the same.

When R¹ and R² each independently represent an alkynyloxy group having 2 to 10 carbon atoms as an organic group, examples of the alkynyloxy group having 2 to 10 carbon atoms are the same as the alkynyloxy group having 2 to 10 carbon atoms when the above X¹ and X² each independently represent the alkynyloxy group having 2 to 10 carbon atoms as an organic group, and referred ranges are also the same.

When R¹ and R² each independently represent a cycloalkoxy group having 3 to 10 carbon atoms as an organic group, examples of the cycloalkoxy group having 3 to 10 carbon atoms are the same as the cycloalkoxy group having 3 to 10 carbon atoms when the above X¹ and X² each independently represent the cycloalkoxy group having 3 to 10 carbon atoms as an organic group, and preferred ranges are also the same.

When R¹ and R² each independently represent a cycloalkenyloxy group having 3 to 10 carbon atoms as an organic group, examples of the cycloalkenyloxy group having 3 to 10 carbon atoms are the same as the cycloalkenyloxy group having 3 to 10 carbon atoms when the above X¹ and X² each independently represent the cycloalkenyloxy group having 3 to 10 carbon atoms as an organic group, and preferred ranges are also the same.

When R¹ and R² each independently represent an aryloxy group having 6 to 10 carbon atoms as an organic group, examples of the aryloxy group having 6 to 10 carbon atoms are the same as the aryloxy group having 6 to 10 carbon atoms when the above X¹ and X² each independently represent the aryloxy group having 6 to 10 carbon atoms as an organic group, and referred ranges are also the same.

When R¹ and R² each independently represent an organic group selected from the above group, at least one selected from a fluorine atom, an oxygen atom, and an unsaturated bond may be present in the organic group.

A description that "when a fluorine atom is present in the organic group" specifically refers to the above group in which the hydrogen atom is substituted with a fluorine atom.

For example, a description that "when an oxygen atom is present in the organic group" specifically refers to a group in which "-O-" (ether bond) is interposed between carbon atoms of the above group.

When R¹ and R² each independently represent an organic group selected from the above group, the organic group may further have a substituent.

R¹ is preferably a chlorine atom, a fluorine atom, or an optionally fluorine-substituted alkyl group having 1 to 10 carbon atoms.

R² is preferably a chlorine atom, a fluorine atom, or an optionally fluorine-substituted alkyl group having 1 to 10 carbon atoms.

M^{m+} represents a proton, an alkali metal cation, an alkaline earth metal cation, or an onium cation, and m represents a valence of the cation.

When M^{m+} represents an alkali metal cation, examples of the alkali metal cation include but not limited to a lithium ion, a sodium ion, and a potassium ion.

When M^{m+} represents an alkaline earth metal cation, examples of the alkaline earth metal cation include but not limited to a magnesium ion and a calcium ion.

When M^{m+} represents an onium cation, examples of the onium cation include but not limited to a trialkylammonium ion, a tetraalkylammonium ion, a tetraalkylphosphonium ion, an imidazolium ion, and an ammonium ion having a spiro skeleton.

Examples of the trialkylammonium ion include an ion in which three alkyl groups and one proton are bonded to a nitrogen atom.

The number of carbon atoms in the alkyl group in the trialkylammonium ion is preferably 1 to 6.

The three alkyl groups in the trialkylammonium ion may be the same or different from each other.

The number of carbon atoms in the alkyl group in the tetraalkylammonium ion is preferably 1 to 6, and the number of carbon atoms in the alkyl group in the tetraalkylphosphonium ion is preferably 1 to 6.

Four alkyl groups in the tetraalkylammonium ion may be the same or different from each other, and four alkyl groups in the tetraalkylphosphonium ion may be the same or different from each other.

The ammonium ion having a spiro skeleton is preferably, for example, 5-azoniaspiro[4.4]nonane.

M^{m+} preferably represents an alkali metal cation or a trialkylammonium ion.

An anion moiety of the compound represented by Formula [1] is shown below, but the present disclosure is not limited thereto. Me represents a methyl group, and Et represents an ethyl group.

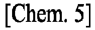

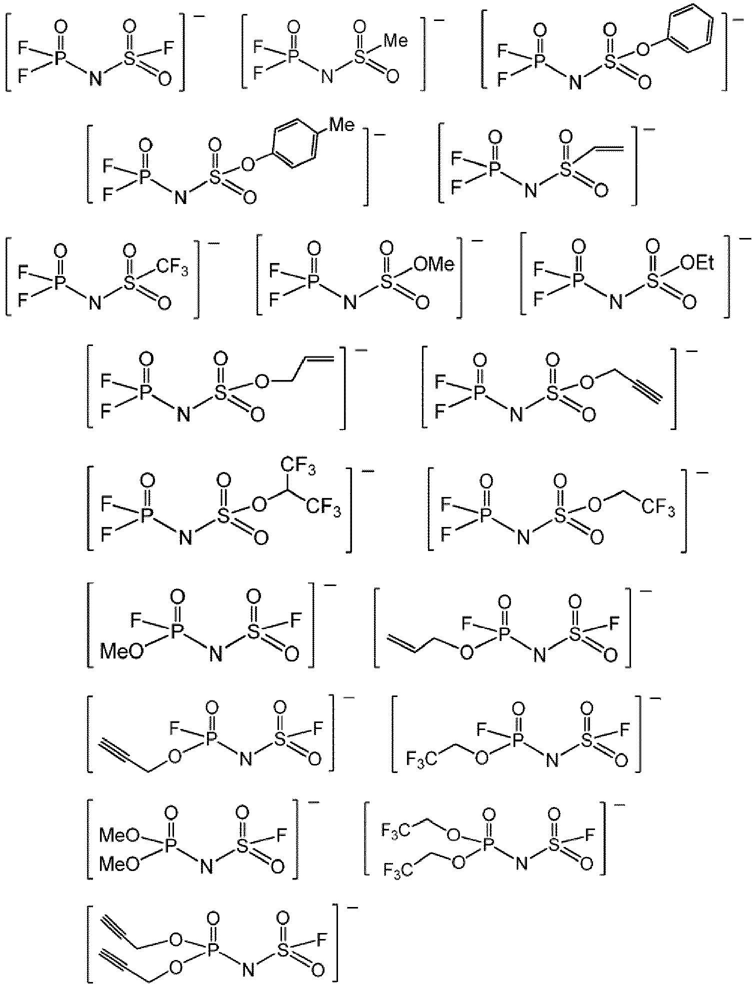

The compound represented by Formula [1] can be synthesized by a known method. In a preferred embodiment, the compound represented by Formula [1] can be synthesized by the method described in Examples below.

Regarding the compound represented by Formula [1], one type of compounds may be used alone, or two or more types of compounds may be mixed and used in any combination and ratio according to an application.

A concentration of the compound represented by Formula [1] in the nonaqueous solution is not limited, but is preferably 1% by mass to 90% by mass, more preferably 1% by mass to 80% by mass, and further preferably 1% by mass to 70% by mass.

### (Nonaqueous Solvent)

A type of the nonaqueous solvent to be used in the nonaqueous solution according to the present disclosure is not limited, and any nonaqueous organic solvent can be used.

The nonaqueous solvent is preferably at least one selected from the group consisting of a cyclic ester, a chain ester, a cyclic ether, a chain ether, a sulfone compound, a sulfoxide compound, and an ionic liquid.

Specifically, the nonaqueous solvent is preferably at least one selected from the group consisting of ethyl methyl carbonate (hereinafter, also described as "EMC"), dimethyl carbonate (hereinafter, also described as "DMC"), diethyl carbonate (hereinafter, also described as "DEC"), methyl propyl carbonate, ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, bis(2,2,2-trifluoroethyl) carbonate, 1,1,1,3,3,3-hexafluoro-1-propylmethyl carbonate, 1,1,1,3,3,3-hexafluoro-1-propylethyl carbonate, 1,1,1,3,3,3-hexafluoro-1-propylpropyl carbonate, bis(1,1,1,3,3,3-hexafluoro-1-propyl) carbonate, ethylene carbonate (hereinafter also described as "EC"), propylene carbonate (hereinafter, also described as "PC"), butylene carbonate, fluoroethylene carbonate (hereinafter, also described as "FEC"), difluoroethylene carbonate, methyl acetate, ethyl acetate, methyl propionate, ethyl propionate, methyl 2-fluoropropionate, ethyl 2-fluoropropionate, diethyl ether, dibutyl ether, diisopropyl ether, 1,2-dimethoxyethane, diethylene glycol dimethyl ether, tetrahydrofuran, 2-methyltetrahydrofuran, furan, tetrahydropyran, 1,3-dioxane, 1,4-dioxane, N,N-dimethylformamide, acetonitrile, propionitrile, dimethyl sulfoxide, sulfolane, γ-butyrolactone, and γ-valerolactone.

In the present disclosure, an ionic liquid having a salt structure may be used as the nonaqueous solvent.

Preferably, the nonaqueous solvent is at least one selected from the group consisting of a cyclic ester and a chain ester due to an advantage of excellent input and output characteristics at low temperatures from a viewpoint of battery characteristics.

Preferably, the above nonaqueous solvent is at least one selected from the group consisting of cyclic carbonates and chain carbonates due to an advantage of excellent cycle characteristics at high temperatures from the viewpoint of battery characteristics.

The nonaqueous solvent preferably contains a cyclic ester, and the cyclic ester is preferably cyclic carbonate.

Specific examples of the above cyclic carbonate include EC, PC, butylene carbonate, and FEC, and at least one selected from the group consisting of EC, PC, and FEC is preferable.

The nonaqueous solvent preferably contains a chain ester, and the chain ester is preferably chain carbonate.

Specific examples of the above chain carbonate include EMC, DMC, DEC, methyl propyl carbonate, ethyl propyl carbonate, 2,2,2-trifluoroethyl methyl carbonate, 2,2,2-trifluoroethyl ethyl carbonate, 1,1,1,3,3,3-hexafluoro-1-propylmethyl carbonate, and 1,1,1,3,3,3-hexafluoro-1-propylethyl carbonate, and at least one selected from the group consisting of EMC, DMC, DEC, and methyl propyl carbonate is preferable.

Specific examples of the above ester include methyl acetate, ethyl acetate, methyl propionate, ethyl propionate, methyl 2-fluoropropionate, and ethyl 2-fluoropropionate.

The content of the nonaqueous solvent having the dielectric constant (at 25°C) of 10 or less in the nonaqueous solvent is 50% by volume to 100% by volume.

The dielectric constant (at 25°C) of the nonaqueous solvent will be specifically described below.

### <Nonaqueous solvent having the dielectric constant at 25°C of 10 or less>

Each of values in parentheses after names represents the dielectric constant.

EMC (3), DMC (3), DEC (3), methyl acetate (7), ethyl acetate (6), ethyl propionate (6), diethyl ether (4), 1,2-dimethoxyethane (7), tetrahydrofuran (8), 2-methyltetrahydrofuran (7), 1,3-dioxolane (7), 1,4-dioxane (2)

The above is quoted from the Electrochemical Society of Japan's Battery Technology Committee, "Battery Handbook, p. 534, published in 2010".
Ethyl propionate (6, 19°C)
   The above is quoted from "Static Electricity Safety Guidelines (1988) Ministry of Labor Industrial Safety Research Institute Material No. 3 Electrical Conductivity of Various Liquids". The dielectric constant of ethyl propionate is defined as a dielectric constant at 19°C.
Diisopropyl ether (4, 25°C), tetrahydropyran (6, 25°C)
The above is quoted from Heishin Ltd., "Engineer Book Technical Data Collection, 19th Edition, p. 324".

From the values of the dielectric constants at 25°C of the above solvents, it can be estimated that the dielectric constants of the following solvents at 25°C are also all 10 or less.

Methyl propyl carbonate, ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, bis(2,2,2-trifluoroethyl) carbonate, 1,1,1,3,3,3-hexafluoro-1-propylmethyl carbonate, 1,1,1,3,3,3-hexafluoro-1-propylethyl carbonate, 1,1,1,3,3,3-hexafluoro-1-propylpropyl carbonate, bis(1,1,1,3,3,3-hexafluoro-1-propyl) carbonate, methyl propionate, methyl 2-fluoropropionate, ethyl 2-fluoropropionate, dibutyl ether, diethylene glycol dimethyl ether, furan

### <Nonaqueous solvent having the dielectric constant at 25°C of over 10>

Each of values in parentheses after names represents the dielectric constant.

EC (90, 40°C), PC (65), butylene carbonate (56), sulfolane (43, 30°C), γ-butyrolactone (39), acetonitrile (38)

The above is quoted from the Electrochemical Society of Japan's Battery Technology Committee, "Battery Handbook, p. 534, published in 2010". The dielectric constants of EC and sulfolane are dielectric constants at 40°C and 30°C.

N,N-dimethylformamide (37, 25°C), propionitrile (29, 20°C), dimethyl sulfoxide (47, 25°C)

The above is quoted from Heishin Ltd., "Engineer Book Technical Data Collection, 19th Edition, p. 324". The dielectric constant of propionitrile is defined as a dielectric constant at 20°C.

From the values of the dielectric constants of the above solvents at 25°C, it can be estimated that the dielectric constants of the following solvents at 25°C are also all over 10.

Fluoroethylene carbonate (hereinafter also referred to as "FEC"), difluoroethylene carbonate, γ-valerolactone

The content of the nonaqueous solvent having the dielectric constant (at 25°C) of 10 or less in the nonaqueous solvent is 50% by volume to 100% by volume, and a nonaqueous solution containing such a nonaqueous solvent and a compound represented by Formula [1] can easily suppress corrosion even when the nonaqueous solution comes into contact with austenitic stainless steel.

The nonaqueous solvent having the dielectric constant (at 25°C) of 10 or less is at least one selected from the group consisting of ethyl methyl carbonate, dimethyl carbonate, diethyl carbonate, methyl acetate, ethyl acetate, ethyl propionate, 1,2-dimethoxyethane, and diethylene glycol dimethyl ether.

The content of the nonaqueous solvent having the dielectric constant (at 25°C) of 10 or less in the nonaqueous solvent is 50% by volume to 100% by volume, preferably 55% by volume to 100% by volume, and more preferably 70% by volume to 100% by volume.

Regarding the nonaqueous solvent, one type may be used, or two or more types may be used in combination.

An additive component to be commonly used in the nonaqueous solution according to the present disclosure may be further added in any proportion as long as the gist of the present disclosure is not impaired. Examples of the additive component include an additive component to be commonly used in the nonaqueous electrolyte solution according to the present disclosure described below.

The nonaqueous solution comes into contact with the austenitic stainless steel. An aspect of contact is not limited.

Examples of the austenitic stainless steel include but not limited to a wetted member containing austenitic stainless steel, such as a container, a pipe, and a battery member (a current collector and a can).

From a viewpoint of corrosion resistance, a content of martensite in the austenitic stainless steel of the present disclosure is preferably as low as possible, specifically preferably 80 % by volume or less, more preferably 50 % by volume or less, further preferably 20 % by volume or less, even more preferably 10 % by volume or less, and particularly preferably 5% by volume or less. Ideally, substantially zero is desirable. The content of martensite (volume fraction) can be calculated by using saturation magnetization and initial magnetic susceptibility. The above volume fraction can be calculated with reference to S. Kobayahi, A. Saito, S. Takahashi, Y. Kamada and H.Kikuchi:Appl.Phys. Lett. 92(2008) 182508, 1-3. The content rate can also be calculated from results of X-ray diffraction measurements.

Preferably, a container has a housing portion made of austenitic stainless steel.

The above austenitic stainless steel may be treated by using at least one method of acid cleaning and electrolytic polishing.

The acid cleaning is a method of oxidizing a surface of stainless steel by immersing the stainless steel in a strong oxidizing agent such as nitric acid.

The electrolytic polishing is a method of electrolytically polishing a surface of stainless steel by passing a direct current between stainless steel as an anode (positive side) and a cathode electrode (negative side) as a counter electrode, through an electrolyte solution.

The housing portion of the container may be made of austenitic stainless steel, and for example, an outer peripheral portion made of another material may be formed on the outside of the housing portion (on a side opposite to a surface in contact with the nonaqueous electrolyte solution).

The material forming the outer peripheral portion is not limited, but examples thereof include polyolefin resins such as polyethylene and polypropylene, polyester resins such as polyethylene terephthalate, and polyamide resins such as nylon.

The container may or may not have a lid, but the container preferably has a lid from a viewpoint of improving airtightness and suppressing deterioration of the nonaqueous electrolyte solution due to contact with oxygen and the like in the air while the nonaqueous electrolyte solution is stored in the container.

A material of the lid is not limited, but the lid is preferably made of austenitic stainless steel.

A shape of the container is not limited, and can be any shape such as a bottle shape or a cylindrical shape.

In the container having a bottle shape, a cross-sectional shape in a horizontal direction of the container can be any shape, such as a circle or a polygon such as trigonal to octagonal. From a viewpoint of a strength and workability of the container, the cross-sectional shape in the horizontal direction is preferably a circle. The cross-sectional area may be varied continuously in a vertical direction of the container. For example, the cross-sectional area near the center of the container in a height direction can be made smaller than those near both ends of the container in a height direction, and this allows for forming a constricted structure in which a part of a main body (body) of the container is narrowed. A surface of the container can be made uneven to make the container to be easily grasped.

A capacity of the container is not limited, but from a viewpoint of handling, the capacity is preferably 10 cm³ to 1,500,000 cm³, more preferably 20 cm³ to 250,000 cm³, even more preferably 50 cm³ to 20,000 cm³, and particularly 100 cm³ to 1,000 cm³. A diameter of the body of the container is not limited, but from a viewpoint of ease of handling, the diameter is preferably 50 mm to 1,500 mm and more preferably 60 mm to 1,200 mm.

The austenitic stainless steel is preferably SUS304, SUS316, SUS316L, and the like. SUS304, SUS316, and SUS316L are specified in Japanese Industrial Standard JIS G 4305.

These austenitic stainless steels are preferably acid-cleaned or electrolytically polished in advance.

In the first to third aspects of the present disclosure, even if the nonaqueous solution or the nonaqueous electrolyte solution comes into contact with the austenitic stainless steel, corrosion to the austenitic stainless steel can be suppressed.

The suppression of corrosion can be measured by quantifying a content of a metal component (iron atoms (Fe atoms)) eluted into the nonaqueous solution or the nonaqueous electrolyte solution before and after holding, when the nonaqueous solution or the nonaqueous electrolyte solution comes into contact with the austenitic stainless steel and the holding is performed.

After the holding at 45°C for 6 months and before the holding, the contents of the metal component (iron atoms) eluted into the nonaqueous solution or the nonaqueous electrolyte solution are preferably 5 mass ppm or less, and more preferably 4 mass ppm or less.

The contents of Fe in the solution before and after the holding are measured using an ICP Optical Emission Spectrometer (Agilent 5110 ICP-OES).

The present disclosure relates to a holding method for holding a nonaqueous solution in a wetted member containing austenitic stainless steel, in which the nonaqueous solution contains a nonaqueous solvent and an imidic acid or imidic acid salt represented by the following Formula [1], and a content of the nonaqueous solvent having a dielectric constant (at 25°C) of 10 or less in the nonaqueous solvent is 50% by volume to 100% by volume. 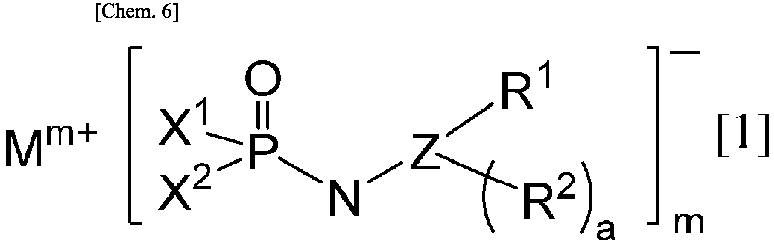
[In Formula [1], X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group.
Z represents -P(=O)<, -S(=O)z-, or -C(=O)-. a is 0 or 1. When Z represents -P(=O)<, a is 1, and when Z represents -S(=O)₂- or -C(=O)-, a is 0.
R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group.
M^{m+} represents a proton, an alkali metal cation, an alkaline earth metal cation, or an onium cation, and m represents a valence of the cation.]

The wetted member containing austenitic stainless steel is as described above.

The imidic acid or imidic acid salt represented by Formula [1] is as described above.

The nonaqueous solvent and the nonaqueous solvent having the dielectric constant (at 25°C) of 10 or less are as described above.

The content of the nonaqueous solvent having the dielectric constant (at 25°C) of 10 or less in the nonaqueous solvent is 50% by volume to 100% by volume, preferably 60% by volume to 100% by volume, and more preferably 80% by volume to 100% by volume.

A concentration of the compound represented by Formula [1] in the nonaqueous solution is not limited, but is preferably 1% by mass to 90% by mass, more preferably 1% by mass to 80% by mass, and further preferably 1% by mass to 70% by mass.

The term "hold" in "method for holding a nonaqueous solution in a wetted member containing austenitic stainless steel" includes transfer of the nonaqueous solution in a pipe, retention of the nonaqueous solution in the pipe, and storage of the nonaqueous solution in the container or the like.

An additive component to be commonly used in the nonaqueous solution according to the present disclosure may be further added in any proportion as long as the gist of the present disclosure is not impaired. Examples of the additive component include an additive component to be commonly used in the nonaqueous electrolyte solution according to the present disclosure described below.

The temperature in the above holding method is not limited, but is preferably -20°C to 50°C. A pressure in the above holding method is not limited, but is preferably 0 MPaG to 0.25 MPaG.

The above holding method can be carried out in a gas phase. The gas phase is preferably nitrogen gas. In the gas phase, dry air filling is also preferred. A moisture content in the gas phase is not limited, but is preferably 5 mass ppm to 150 mass ppm.

In addition, the present disclosure relates to a nonaqueous battery, including: a wetted member containing austenitic stainless steel; and a nonaqueous electrolyte solution in contact with the wetted member, in which the nonaqueous electrolyte solution contains a nonaqueous solvent and an imidic acid or imidic acid salt represented by the following Formula [1], and a content of the nonaqueous solvent having a dielectric constant (at 25°C) of 10 or less in the nonaqueous solvent is 50% by volume to 100% by volume. 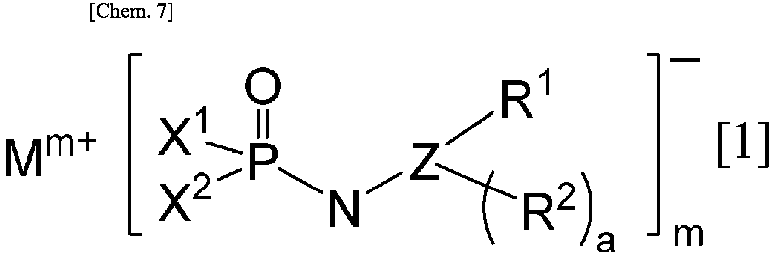
[In Formula [1], X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group.
Z represents -P(=O)<, -S(=O)z-, or -C(=O)-. a is 0 or 1. When Z represents -P(=O)<, a is 1, and when Z represents -S(=O)₂- or -C(=O)-, a is 0.
R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group.
M^{m+} represents a proton, an alkali metal cation, an alkaline earth metal cation, or an onium cation, and m represents a valence of the cation.]

The nonaqueous electrolyte solution comes into contact with the wetted member containing austenitic stainless steel. An aspect of contact is not limited.

The wetted member containing austenitic stainless steel is as described above.

The imidic acid or imidic acid salt represented by Formula [1] is as described above.

The nonaqueous solvent and the nonaqueous solvent having the dielectric constant (at 25°C) of 10 or less are as described above.

The content of the nonaqueous solvent having the dielectric constant (at 25°C) of 10 or less in the nonaqueous solvent is 50% by volume to 100% by volume, preferably 60% by volume to 100% by volume, and more preferably 80% by volume to 100% by volume.

The concentration of the compound represented by Formula [1] in the nonaqueous electrolyte solution is not limited, but is preferably 0.1% by mass to 10% by mass, more preferably 0.5% by mass to 8% by mass or less, and further preferably 1% by mass to 5% by mass.

An additive component to be commonly used in the nonaqueous electrolyte solution according to the present disclosure may be further added in any proportion as long as the gist of the present disclosure is not impaired.

### (Solute)

The nonaqueous electrolyte solution according to the present disclosure preferably contains a solute.

The solute is not limited, but is preferably an ionic salt, more preferably an ionic salt containing fluorine.

The solute is preferably, for example, an ionic salt containing a pair of at least one cation selected from the group consisting of alkali metal ions such as lithium ions and sodium ions, alkaline earth metal ions, and quaternary ammonium, and at least one anion selected from the group consisting of a hexafluorophosphate anion, a tetrafluoroborate anion, a perchlorate anion, a hexafluoroarsenate anion, a hexafluoroantimonate anion, a trifluoromethanesulfonate anion, a bis(trifluoromethanesulfonyl)imide anion, a bis(pentafluoroethanesulfonyl)imide anion, a (trifluoromethanesulfonyl)(pentafluoroethanesulfonyl)imide anion, a bis(fluorosulfonyl)imide anion, a (trifluoromethanesulfonyl)(fluorosulfonyl)imide anion, a (pentafluoroethanesulfonyl)(fluorosulfonyl)imide anion, and a tris(trifluoromethanesulfonyl)methide anion.

Examples of the solute include hexafluorophosphate (preferably LiPF₆, NaPF₆), tetrafluoroborate (preferably LiBF₄, NaBF₄), bis(fluorosulfonyl)imidic acid salt (preferably LiN(SO₂F)₂, NaN(SO₂F)₂), difluorophosphate (preferably LiPO₂F₂, NaPO₂F₂), fluorosulfonate (preferably LiFSO₃, NaFSO₃), bis(oxalato)borate (preferably LiB(C₂O₄)₂, NaB(C₂O₄)₂), difluoro(oxalato)borate (preferably LiBF₂(C₂O₄), NaBF₂(C₂O₄)), difluorobis(oxalato)phosphate (preferably LiPF₂(C₂O₄)₂, NaPF₂(C₂O₄)₂), or tetrafluoro(oxalato)phosphate (preferably LiPF₄(C₂O₄), NaPF₄(C₂O₄)).

The solute is preferably at least one selected from the group consisting of LiPF₆, LiBF₄, LiSbF₆, LiAsF₆, LiClO₄, LiFSO₃, LiCF₃SO₃, LiC₄F₉SO₃, LiN(SO₂F)₂, LiB(C₂O₄)₂, LiBF₂(C₂O₄), LiPF₂(C₂O₄)₂, LiPF₄(C₂O₄), LiAlO₂, LiAlCl₄, LiCl, and LiI, or at least one selected from the group consisting of NaPF₆, NaBF₄, NaSbF₆, NaAsF₆, NaClO₄, NaFSO₃, NaCF₃SO₃, NaC₄F₉SO₃, NaN(SO₂F)₂, NaB(C₂O₄)₂, NaBF₂(C₂O₄), NaPF₂(C₂O₄)₂, NaPF₄(C₂O₄), NaAlO₂, NaAlCl₄, NaCl, and NaI.

One type of these solutes may be used alone, or two or more types may be mixed and used in any combination and any proportion according to an application.

Among the above solutes, considering energy density, output characteristics, life, and the like of a nonaqueous electrolyte solution battery, the cation is preferably at least one selected from the group consisting of lithium, sodium, potassium, magnesium, and quaternary ammonium, and the anion is preferably at least one selected from the group consisting of a hexafluorophosphate anion, a tetrafluoroborate anion, a bis(trifluoromethanesulfonyl)imide anion, and a bis(fluorosulfonyl)imide anion.

A total amount of the solute in the nonaqueous electrolyte solution according to the present disclosure (hereinafter, also described as "solute concentration") is not limited, but a lower limit is preferably 0.5 mol/L or more, more preferably 0.7 mol/L or more, and further preferably 0.9 mol/L or more. In addition, an upper limit of the solute concentration is preferably 5.0 mol/L or less, more preferably 4.0 mol/L or less, and further preferably 2.0 mol/L or less. Setting the solute concentration to 0.5 mol/L or more allows for reducing deterioration of the cycle characteristics and the output characteristics of the nonaqueous electrolyte solution battery due to deterioration in ionic conductivity, and setting the solute concentration to 5.0 mol/L or less allows for reducing the deterioration in ionic conductivity, and the deterioration in the cycle characteristics and the output characteristics of the nonaqueous electrolyte solution battery due to an increase in the viscosity of the nonaqueous electrolyte solution.

### (Another Additive)

Specific examples of another additive include compounds that have an overcharge prevention effect, a negative electrode film-forming effect, and a positive electrode protective effect, such as cyclohexylbenzene, cyclohexylfluorobenzene, fluorobenzene, biphenyl, difluoroanisole, tert-butylbenzene, tert-amylbenzene, 2-fluorotoluene, 2-fluorobiphenyl, vinylene carbonate, dimethylvinylene carbonate, vinylethylene carbonate, fluoroethylene carbonate, trans-difluoroethylene carbonate, methyl propargyl carbonate, ethyl propargyl carbonate, dipropargyl carbonate, maleic anhydride, succinic anhydride, propanesultone, 1,3-propanesultone, 1,3-propenesultone, butanesultone, 1,3,2-dioxathiolane-2,2-dioxide, 4-propyl-1,3,2-dioxathiolane-2,2-dioxide, methylene methanedisulfonate, ethylene methanedisulfonate, trimethylene methanedisulfonate, methyl methanesulfonate, 1,2-ethanedisulfonic anhydride, 1,6-diisocyanatohexane, tris(trimethylsilyl)borate, succinonitrile, (ethoxy)pentafluorocyclotriphosphazene, lithium difluorobis(oxalato)phosphate, sodium difluorobis(oxalato)phosphate, potassium difluorobis(oxalato)phosphate, lithium difluorooxalatoborate, sodium difluorooxalatoborate, potassium difluorooxalatoborate, lithium bis(oxalato)borate, sodium bis(oxalato)borate, potassium bis(oxalato)borate, lithium tetrafluorooxalatophosphate, sodium tetrafluorooxalatophosphate, potassium tetrafluorooxalatophosphate, lithium tris(oxalato)phosphate, sodium tris(oxalato)phosphate, potassium tris(oxalato)phosphate, lithium difluorophosphate, sodium difluorophosphate, potassium difluorophosphate, lithium monofluorophosphate, sodium monofluorophosphate, potassium monofluorophosphate, lithium fluorosulfonate, sodium fluorosulfonate, potassium fluorosulfonate, methanesulfonyl fluoride, ethenesulfonyl fluoride, and phenyl difluorophosphate.

The nonaqueous electrolyte solution according to the present disclosure may contain at least one selected from the group consisting of vinylene carbonate, bis(oxalato)borate, difluorooxalatoborate, difluorobis(oxalato)phosphate, tetrafluorooxalatophosphate, difluorophosphate, fluorosulfonate, 1,3-propenesultone, 1,3-propanesultone, 1,6-diisocyanatohexane, ethynylethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonyl fluoride, tris(trimethylsilyl)borate, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, tetravinylsilane, t-butylbenzene, t-amylbenzene, fluorobenzene, and cyclohexylbenzene. A content of the above additive in the nonaqueous electrolyte solution is preferably 0.01% by mass or more and 5.0% by mass or less with respect to a total amount of the nonaqueous electrolyte solution.

A content of another additive in the nonaqueous electrolyte solution is preferably 0.01% by mass or more and 8.0% by mass or less with respect to the total amount of the nonaqueous electrolyte solution.

When a content of the ionic salt exemplified as the solute is less than 0.5 mol/L, which is the lower limit of the suitable concentration of the solute, in the nonaqueous electrolyte solution, the ionic salt can exert a negative electrode film-forming effect and a positive electrode protective effect as "another additive". In this case, the content in the nonaqueous electrolyte solution is preferably 0.01% by mass to 5.0% by mass.

For example, when the nonaqueous electrolyte solution battery is a lithium ion battery, examples of the ionic salt include lithium hexafluorophosphate, lithium tetrafluoroborate, lithium trifluoromethanesulfonate, lithium bis(trifluoromethanesulfonyl)imide, lithium bis(fluorosulfonyl)imide, and lithium (trifluoromethanesulfonyl)(fluorosulfonyl)imide, and when the nonaqueous electrolyte solution battery is a sodium ion battery, examples of the ionic salt include sodium hexafluorophosphate, sodium tetrafluoroborate, sodium trifluoromethanesulfonate, sodium bis(trifluoromethanesulfonyl)imide, sodium bis(fluorosulfonyl)imide, and sodium (trifluoromethanesulfonyl)(fluorosulfonyl)imide.

An alkali metal salt other than the above solutes may also be used as an additive.

Specific examples include carboxylates such as lithium acrylate, sodium acrylate, lithium methacrylate, and sodium methacrylate, and sulfuric acid ester salts such as lithium methyl sulfate, sodium methyl sulfate, lithium ethyl sulfate, and sodium ethyl sulfate.

From a viewpoint of improving durability (life) of a battery, when the nonaqueous electrolyte solution battery is a lithium ion battery, the nonaqueous electrolyte solution according to the present disclosure preferably contains, with respect to the total amount of the nonaqueous electrolyte solution, 0.01% by mass to 5.0% by mass of at least one selected from vinylene carbonate, fluoroethylene carbonate, lithium bis(oxalato)borate, lithium difluorooxalatoborate, lithium difluorobis(oxalato)phosphate, lithium tetrafluorooxalatophosphate, lithium bis(fluorosulfonyl)imide, lithium difluorophosphate, lithium fluorosulfonate, 1,3-propenesultone, 1,3-propanesultone, 1,3,2-dioxathiolane-2,2-dioxide, and 4-propyl-1,3,2-dioxathiolane-2,2-dioxide in the above another additive.

When the nonaqueous electrolyte solution battery is a sodium ion battery, the nonaqueous electrolyte solution preferably contains, with respect to the total amount of the nonaqueous electrolyte solution, 0.01% by mass to 5.0% by mass of at least one selected from vinylene carbonate, fluoroethylene carbonate, sodium bis(oxalato)borate, sodium difluorooxalatoborate, sodium difluorobis(oxalato)phosphate, sodium tetrafluorooxalatophosphate, sodium bis(fluorosulfonyl)imide, sodium difluorophosphate, sodium fluorosulfonate, 1,3-propenesultone, 1,3-propanesultone, 1,3,2-dioxathiolane-2,2-dioxide, and 4-propyl-1,3,2-dioxathiolane-2,2-dioxide.

In the above nonaqueous battery, the nonaqueous electrolyte solution comes into contact with the wetted member containing austenitic stainless steel. An aspect of contact is not limited.

The wetted member containing austenitic stainless steel is as described above. The wetted member containing austenitic stainless steel to be used in the above nonaqueous battery is not limited, but examples thereof may include a current collector in a positive electrode and a current collector in a negative electrode, which will be described later.

The nonaqueous battery according to the embodiment of the present disclosure at least includes the above nonaqueous electrolyte solution, the negative electrode, and the positive electrode.

More specifically, the nonaqueous battery according to the present disclosure preferably includes the positive electrode, the negative electrode made of lithium or a negative electrode material capable of intercalating and deintercalating lithium, the above nonaqueous electrolyte solution, a current collector, a separator, a container, and the like. Alternatively, the nonaqueous battery according to the present disclosure preferably includes the positive electrode, the negative electrode made of sodium or a negative electrode material capable of intercalating and deintercalating sodium, the above nonaqueous electrolyte solution, a current collector, a separator, a container, and the like. Alternatively, the nonaqueous electrolyte solution battery according to the present disclosure preferably includes the positive electrode, the negative electrode made of potassium or a negative electrode material capable of intercalating and deintercalating potassium, the above nonaqueous electrolyte solution, a current collector, a separator, a container, and the like.

### [Positive Electrode]

The positive electrode includes a positive electrode active material, a current collector, a conductive material, and a binder, and a type of the positive electrode active material is not limited, but the positive electrode active material uses a material that can reversibly intercalate and deintercalate lithium ions, sodium ions, and/or potassium ions.

In the case of a lithium ion secondary battery in which cations in the nonaqueous electrolyte solution are mainly lithium, (b) the positive electrode active material constituting the positive electrode is not limited as long as the positive electrode active material is a material that can be charged and discharged, but examples of the positive electrode active material include a material containing at least one selected from the group consisting of, for example, (A) a lithium-transition metal composite oxide having a layered structure and containing at least one metal selected from the group consisting of nickel, manganese, and cobalt, (B) a lithium-manganese composite oxide having a spinel structure, (C) a lithium-containing olivine-type phosphate, and (D) a lithium-rich layered transition metal oxide having a layered rocksalt structure.

### ((A) Lithium-Transition Metal Composite Oxide)

Examples of the (A) lithium-transition metal composite oxide having a layered structure and containing at least one metal selected from the group consisting of nickel, manganese, and cobalt, which is the positive electrode active material, include a lithium-cobalt composite oxide, a lithium-nickel composite oxide, a lithium-nickel-cobalt composite oxide, a lithium-nickel-cobalt-aluminum composite oxide, a lithium-cobalt-manganese composite oxide, a lithium-nickel-manganese composite oxide, and a lithium-nickel-manganese-cobalt composite oxide. A part of transition metal atoms that are main components of these lithium-transition metal composite oxides may be substituted with other elements such as Al, Ti, V, Cr, Fe, Cu, Zn, Mg, Ga, Zr, Si, B, Ba, Y, and Sn.

Specific examples of the lithium-cobalt composite oxide and the lithium-nickel composite oxide may include LiCoO₂, LiNiO₂, and a lithium cobalt oxide to which different elements such as Mg, Zr, Al, and Ti are added (LiCo_{0.98}Mg_{0.01}Zr_{0.01}O₂, LiCo_{0.98}Mg_{0.01}Al_{0.01}O₂, LiCo_{0.975}Mg_{0.01}Zr_{0.005}Al_{0.01}O₂, and the like), and a lithium cobalt oxide having a rare earth compound adhered to a surface of the lithium cobalt oxide described in WO2014/034043. As described in JP2002-151077A, one in which LiCoO₂ particles whose surfaces are partially coated with aluminum oxide may be used.

The lithium-nickel-cobalt composite oxide and the lithium-nickel-cobalt-aluminum composite oxide are represented by Formula (1-1).

LiₐNi_{1-b-c}Co_{b}M¹_{c}O₂ (1-1)

In Formula (1-1), M¹ represents at least one element selected from the group consisting of Al, Fe, Mg, Zr, Ti, and B, a satisfies 0.9 ≤ a ≤ 1.2, and b and c satisfy 0.1 ≤ b ≤ 0.3 and 0 ≤ c ≤ 0.1 respectively.

These composite oxides can be prepared, for example, according to a production method described in JP2009-137834A. Specific examples of the above composite oxide include LiNi_{0.8}Co_{0.2}O₂, LiNi_{0.85}Co_{0.10}Al_{0.05}O₂, LiNi_{0.87}Co_{0.10}Al_{0.03}O₂, and LiNi_{0.6}Co_{0.3}Al_{0.1}O₂.

Specific examples of the lithium-cobalt-manganese composite oxide and the lithium-nickel-manganese composite oxide include LiNi_{0.5}Mn_{0.5}O₂ and LiCo_{0.5}Mn_{0.5}O₂.

Examples of the lithium-nickel-manganese-cobalt composite oxide include a lithium-containing composite oxide represented by Formula (1-2).

Li_{d}NiₑMn_{f}Co_{g}M²ₕO₂ (1-2)

In Formula (1-2), M² represents at least one element selected from the group consisting of Al, Fe, Mg, Zr, Ti, B, and Sn, d satisfies 0.9 ≤ d ≤ 1.2, and e, f, g, and h satisfy e + f + g + h = 1, 0 ≤ e ≤ 0.7, 0 ≤ f ≤ 0.5, 0 ≤ g ≤ 0.5, and h ≥ 0, respectively.

The lithium-nickel-manganese-cobalt composite oxide preferably contains manganese within the range shown in Formula (1-2) in order to improve structural stability and improve safety at high temperatures in a lithium secondary battery, and in particular, preferably contains cobalt within the range represented by the Formula (1-2) in order to improve high rate characteristics of the lithium ion secondary battery.

Specific examples of the composite oxide include Li[Ni_{1/3}Mn_{1/3}Co_{1/3}]O₂, Li[Ni_{0.45}Mn_{0.35}Co_{0.2}]O₂, Li[Ni_{0.5}Mn_{0.3}Co_{0.2}]O₂, Li[Ni_{0.6}Mn_{0.2}Co_{0.2}]O₂, Li[Ni_{0.49}Mn_{0.3}Co_{0.2}Zr_{0.01}]O₂, Li[Ni_{0.49}Mn_{0.3}Co_{0.2}Mg_{0.01}]O₂, which have a charge and discharge range, for example, at 4.3 V or more.

### ((B) Lithium-Manganese Composite Oxide having Spinel Structure)

Examples of the (B) lithium-manganese composite oxide having the spinel structure, which is an example of the positive electrode active material, include a spinel-type lithium-manganese composite oxide represented by Formula (1-3).

Liⱼ(Mn₂₋ₖM³ₖ)O₄ (1-3)

In Formula (1-3), M³ represents at least one element selected from Ni, Co, Fe, Mg, Cr, Cu, Al, and Ti, and j satisfies 1.05 ≤ j ≤ 1.15, and k satisfies 0 ≤ k ≤ 0.20.

Specific examples include LiMn₂O₄, LiMn_{1.95}Al_{0.05}O₄, LiMn_{1.9}Al_{0.1}O₄, LiMn_{1.9}Ni_{0.1}O₄, and LiMn_{1.5}Ni_{0.5}O₄.

### ((C) Lithium-Containing Olivine-Type Phosphate)

Examples of the (C) lithium-containing olivine-type phosphate, which is the positive electrode active material, include phosphate represented by Formula (1-4).

LiFe₁₋ₙM⁴ₙPO₄ (1-4)

In Formula (1-4), M⁴ represents at least one selected from Co, Ni, Mn, Cu, Zn, Nb, Mg, Al, Ti, W, Zr, and Cd, and n satisfies 0 ≤ n ≤ 1.

Specific examples include LiFePO₄, LiCoPO₄, LiNiPO₄, and LiMnPO₄, and LiFePO₄ and/or LiMnPO₄ are preferable.

### ((D) Lithium-Rich Layered Transition Metal Oxide)

Examples of the (D) lithium-rich layered transition metal oxide having the layered rocksalt structure, which is an example of the positive electrode active material, include a lithium-rich layered transition metal oxide represented by Formula (1-5).

xLiM⁵O₂•(1-x)Li₂M⁶O₃ (1-5)

In Formula (1-5), x is a number satisfying 0 < x < 1, M⁵ represents at least one metal element having an average oxidation number of 3⁺, and M⁶ represents at least one metal element having an average oxidation number of 4⁺. In Formula (1-5), M⁵ preferably represents a metal element selected from Mn, Ni, Co, Fe, V, and Cr having a valence of 3, and the average oxidation number may be 3 where a metal with a valence of 2 and a metal with a valence of 4 are used in the equivalent amount.

In Formula (1-5), M⁶ preferably represents one or more metal elements selected from Mn, Zr, and Ti. Specific examples include 0.5[LiNi_{0.5}Mn_{0.5}O₂]•0.5[Li₂MnO₃], 0.5[LiNi_{1/3}Co_{1/3}Mn_{1/3}O₂]•0.5[Li₂MnO₃], 0.5[LiNi_{0.375}Co_{0.25}Mn_{0.375}O₂]•0.5[Li₂MnO₃], 0.5[LiNi_{0.375}Co_{0.125}Fe_{0.125}Mn_{0.375}O₂]•0.5[Li₂MnO₃], 0.45[LiNi_{0.375}Co_{0.25}Mn_{0.375}O₂]•0.10[Li₂TiO₃]•0.45[Li₂MnO₃].

The positive electrode active material (D) represented by Formula (1-5) is known to exhibit high capacity in high-voltage charge at 4.4 V or higher (in terms of Li) (for example, US7,135,252B).

These positive electrode active materials can be prepared, for example, according to production methods described in JP2008-270201A, WO2013/118661, JP2013-030284A, and the like.

The positive electrode active material may contain at least one selected from (A) to (D) above as a main component, and examples of other contained components include transition element chalcogenides such as FeS₂, TiS₂, V₂O₅, MoO₃, and MoS₂, conductive polymers such as polyacetylene, polyparaphenylene, polyaniline, and polypyrrole, activated carbon, radical-generating polymers, and carbon materials. One type of these positive electrode active materials may be used alone, or two or more types thereof may be used in combination.

When the cation is sodium, a positive electrode material (positive electrode active material) is not limited, but examples thereof include sodium-containing transition metal composite oxides such as NaCrO₂, NaFe_{0.5}Co_{0.5}O₂, NaFe_{0.4}Mn_{0.3}Ni_{0.3}O₂, NaNi_{0.5}Ti_{0.3}Mn_{0.2}O₂, NaNi_{1/3}Ti_{1/3}Mn_{1/3}O₂, NaNi_{0.33}Ti_{0.33}Mn_{0.16}Mg_{0.17}O₂, Na_{2/3}Ni_{1/3}Ti_{1/6}Mn_{1/2}O₂, and Na_{2/3}Ni_{1/3}Mn_{2/3}O₂, these sodium-containing transition metal composite oxides including a mixture of a plurality of transition metals such as Co, Mn, and Ni, these sodium-containing transition metal composite oxides in which a part of the transition metals is substituted with a metal other than the transition metals, polyanion type compounds such as NaFePO₄, NaVPO₄F, Na₃V₂(PO₄)₃, and Na₂Fe₂(SO₄)₃, sodium salts of Prussian Blue analogues represented by a composition formula NaₐM_{b}[Fe(CN)₆]_{c} (M=Cr, Mn, Fe, Co, Ni, Cu, or Zn, 0 ≤ a ≤ 2, 0.5 ≤ b ≤ 1.5, 0.5 ≤ c ≤ 1.5), oxides such as TiO₂, V₂O₅, and MoO₃, sulfides such as TiS₂ and FeS, conductive polymers such as polyacetylene, polyparaphenylene, polyaniline, and polypyrrole, activated carbon, radical-generating polymers, and carbon materials. One type of these positive electrode active materials may be used alone, or two or more types thereof may be used in combination.

When the cation is potassium, the positive electrode material (positive electrode active material) is not limited, but examples thereof include polyanion type compounds such as KFePO₄, KVOPO₄, KFeSO₄F, KVPO₄F, and K₃V₂(PO₄)₃, potassium salts of Prussian Blue analogues represented by a composition formula KₐM_{b}[Fe(CN)₆]_{c} (M=Cr, Mn, Fe, Co, Ni, Cu or Zn, 0 ≤ a ≤ 2, 0. 5 ≤ b ≤ 1.5, 0.5 ≤ c ≤ 1.5), potassium-containing transition metal composite oxides such as KCrOz, K_{0.3}MnO₂, K_{0.7}Fe_{0.5}Mn_{0.5}O₂, and K_{2/3}Ni_{1/2}Mg_{1/6}Te_{1/3}O₂, conductive polymers such as polyacetylene, polymethyl methacrylate, polyparaphenylene, polyaniline, and polypyrrole, anhydrous perylene, activated carbon, radical-generating polymers, and carbon materials. One type of these positive electrode active materials may be used alone, or two or more types thereof may be used in combination.

In the positive electrode, for example, a positive electrode active material layer is formed on at least one surface of a positive electrode current collector. The positive electrode active material layer includes, for example, the positive electrode active material described above, a binder, and, if necessary, a conductive agent. Examples of the binder include polytetrafluoroethylene, polyvinylidene fluoride, and styrene-butadiene rubber (SBR) resin. The conductive agent can use, for example, carbon materials such as acetylene black, ketjen black, carbon fiber, or graphite (granular graphite or flake graphite), and preferably uses acetylene black or ketjen black, which has low crystallinity. One type of these binders and conductive agents may be used alone, or two or more types thereof may be used in combination.

### [Negative Electrode]

The negative electrode includes a negative electrode active material, a current collector, a conductive material, and a binder, and a type of the negative electrode active material is not limited, but a material that can reversibly intercalate and deintercalate lithium ions, sodium ions, and potassium ions is used.

In the case of the lithium ion secondary battery in which cations in the nonaqueous electrolyte solution are mainly lithium, the negative electrode active material constituting the (c) negative electrode is capable of doping and dedoping lithium ions, and examples thereof includes those containing at least one selected from, for example, (E) a carbon material in which a d value of a lattice plane (002 plane) in X-ray diffraction is 0.340 nm or less, (F) a carbon material in which the d value of the lattice plane (002 plane) in X-ray diffraction exceeds 0.340 nm, (G) oxides of one or more metals selected from Si, Sn, and Al, (H) one or more metals selected from Si, Sn, and Al, alloys containing these metals, alloys of these metals and lithium, or alloys of the above alloys and lithium, and (I) lithium titanium oxide. One of these negative electrode active materials can be used alone, or two or more thereof can be used in combination.

### ((E) Carbon Material in which d Value of Lattice Plane (002 Plane) in X-Ray Diffraction Is 0.340 nm or Less)

Examples of the (E) carbon material in which the d value of the lattice plane (002 plane) in X-ray diffraction is 0.340 nm or less include pyrolytic carbons, cokes (for example, pitch coke, needle coke, and petroleum coke), graphite, burned body of organic polymer compounds (for example, carbonized products obtained by burning phenol resin and/or furan resin at an appropriate temperature), carbon fibers, and activated carbon, and these examples may be graphitized. The carbon material preferably has a (002) plane spacing (d002) of 0.340 nm or less as measured by an X-ray diffraction method, and is preferably graphite having a true density of 1.70 g/cm³ or more or a highly crystalline carbon material having properties close to that of graphite.

### ((F) Carbon Material in which d Value of Lattice Plane (002 Plane) in X-Ray Diffraction Exceeds 0.340 nm)

Examples of the (F) carbon material in which the d value of the lattice plane (002 plane) in X-ray diffraction exceeds 0.340 nm include amorphous carbon, and the amorphous carbon is a carbon material whose stacking order hardly changes even when the amorphous carbon is heat-treated at a high temperature of 2000°C or higher. Examples include non-graphitizable carbons (hard carbon), mesocarbon microbeads (MCMB) prepared by baking at 1500°C or lower, and mesophase pitch carbon fiber (MCF). Carbotron (registered trademark) P or the like manufactured by Kureha Corporation is a typical example of the amorphous carbon material.

### ((G) Oxides of One or More Metal Selected from Si, Sn, and Al)

Examples of the (G) oxides of one or more metals selected from Si, Sn, and Al include silicon oxide and tin oxide capable of doping and dedoping lithium ions.

Examples thereof also include SiOₓ and the like having a structure in which Si ultra fine particles are dispersed in SiO₂. When this material is used as the negative electrode active material, charge and discharge are performed smoothly because Si that reacts with Li is an ultra fine particle, and the composition (paste) for forming the negative electrode active material layer has good coating properties and good adhesion of the negative electrode mixture layer to the current collector, as the SiOₓ particles themselves having the above structure have a small surface area, and thus,.

SiOₓ shows a large volume change in accordance with the charge and discharge, and thus, combined use of SiOₓ and graphite of the negative electrode active material (E) in a specific ratio as the negative electrode active material can achieve both high capacity and good charge and discharge cycle characteristics .

### ((H) One or More Metals Selected from Si, Sn, and Al, Alloys Containing These Metals, Alloys of These Metals and Lithium, or Alloys of These Alloys and Lithium)

Examples of the (H) one or more metals selected from Si, Sn, and Al, alloys containing these metals, alloys of these metals and lithium, or alloys of the above alloys and lithium include metals such as silicon, tin, and aluminum, silicon alloys, tin alloys, and aluminum alloys, and materials in which these metals and alloys are alloyed with lithium due to the charge and discharge can also be used.

Preferable specific examples include elemental metals (for example, in powdery form) such as silicon (Si) and tin (Sn), alloys of the metals, compounds containing the metals, and alloys containing tin (Sn) and cobalt (Co) in these metals, which are described in WO2004/100293 and JP2008-016424A. The metals are preferable to be used for the electrode, as a high charge capacity can be exhibited and expansion and contraction of the volume due to the charge and discharge is relatively small. These metals are known to exhibit a high charge capacity because the metals are alloyed with Li during the charge when used for a negative electrode of a lithium ion secondary battery, and are also preferable in this respect.

Furthermore, for example, a negative electrode active material formed of silicon pillars with a submicron diameter, and a negative electrode active material made of fibers made of silicon, which are described in WO2004/042851, or WO2007/083155, and the like may be used.

### ((I) Lithium Titanium Oxide)

Examples of the (I) lithium titanium oxide include lithium titanate having a spinel structure and lithium titanate having a ramsdellite structure.

Examples of lithium titanate having the spinel structure include Li_{4+α}Ti₅O₁₂ (α varies within a range of 0 ≤ α ≤ 3 in accordance with a charge and discharge reaction). Examples of lithium titanate having the ramsdellite structure include Li_{2+β}Ti₃O₇ (β varies within a range of 0 ≤ β ≤ 3 in accordance with the charge and discharge reaction). These negative electrode active materials can be prepared, for example, according to production methods described in JP2007-018883A, JP2009-176752A, and/or the like.

When the cation is sodium, examples of the negative electrode active material include but not limited to a sodium metal or a material capable of intercalating and deintercalating sodium ions. For example, a sodium metal, an alloy of a sodium metal and other metals such as tin, an intermetallic compound, various carbon materials such as hard carbon, a metal oxide such as titanium oxide, a metal nitride, (elemental) tin, a tin compound, activated carbon, and a conductive polymer are used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like are used. One type of these negative electrode active materials may be used alone, or two or more types thereof may be used in combination.

When the cation is potassium, examples of the negative electrode active material include but not limited to a potassium metal or a material capable of intercalating and deintercalating potassium ions. For example, a potassium metal, an alloy of a potassium metal and other metals such as tin and bismuth, an intermetallic compound, (elemental) phosphorus such as red phosphorus and black phosphorus, various carbon materials, and a metal oxide such as titanium oxide are used. Examples of the above carbon material include graphitizable carbon, non-graphitizable carbon (also referred to as hard carbon) having a plane spacing of (002) planes of 0.37 nm or more, and graphite having a plane spacing of (002) planes of 0.37 nm or less, and artificial graphite, natural graphite, and the like are used as the graphite. One type of these negative electrode active materials may be used alone, or two or more types thereof may be used in combination.

In the negative electrode, for example, a negative electrode active material layer is formed on at least one surface of the negative electrode current collector. The negative electrode active material layer includes, for example, the negative electrode active material described above, a binder, and, if necessary, a conductive agent. Examples of the binder include polytetrafluoroethylene, polyvinylidene fluoride, and styrene-butadiene rubber (SBR) resin. For example, a carbon material such as acetylene black, ketjen black, carbon fiber, or graphite (granular graphite or flake graphite) can be used as the conductive agent. One type of these binders and conductive agents may be used alone, or two or more types thereof may be used in combination.

### [Current Collector]

Copper, aluminum, stainless steel, nickel, titanium, or alloys thereof can be used for the positive electrode current collector and the negative electrode current collector. An active material layer is formed on at least one surface of the current collector.

Examples of a preferred embodiment include an embodiment in which a wetted member containing austenitic stainless steel is a positive electrode current collector or a negative electrode current collector.

### [Separator]

As a separator for preventing contact between the positive electrode and the negative electrode, a nonwoven fabric or porous sheet made of polyolefin (for example, polypropylene or polyethylene), paper, and glass fiber are used. These are preferably microporous such that the electrolyte solution easily permeates and the ions easily pass through.

### [Exterior Body]

As an exterior body, for example, a coin-shaped, cylindrical, square-shaped metal can, or a laminated exterior body can be used. Examples of a metal can material include a nickel-plated steel plate, a stainless steel plate, a nickel-plated stainless steel plate, aluminum or alloys thereof, nickel, and titanium. As the laminated exterior body, for example, an aluminum laminated film, a SUS laminated film, a laminated film of silica-coated polypropylene or silica-coated polyethylene can be used.

Examples of a preferred embodiment include an embodiment in which a wetted member containing austenitic stainless steel is a metal can material.

### EXAMPLE

Hereinafter, the present disclosure will be specifically explained with reference to Examples, but the present disclosure is not limited to these Examples.

### [Synthesis Example 1] [HN(C₂H₅)₃]⁺, [(F₂PO)₂N]⁻

The present synthesis example used a reaction described in Example 6 of Patent Literature 2.

A 1 L autoclave was charged with 210 g of acetonitrile and 210 g (2.08 mol) of triethylamine, and then cooled to 5°C with ice water, followed by introducing 155 g (1.56 mol) of phosphoryl fluoride thereinto. Subsequently, 10.4 g (0.61 mol) of anhydrous ammonia was introduced with spending 1 hour. A reactor was heated to be at room temperature (23°C), and the mixture was stirred for 48 hours. The obtained reaction solution contained a [bis(difluorophosphoryl)imide]triethylammonium salt, which is an imidic acid salt having a phosphoryl group, and triethylamine hydrofluoride, which is a by-product.

After concentrating the reaction solution and removing acetonitrile, ethyl acetate was added to the residue to obtain an ethyl acetate solution, and the solution was washed twice with water to remove triethylamine hydrofluoride which is a by-product. Furthermore, ethyl acetate was distilled off under reduced pressure to obtain a [bis(difluorophosphoryl)imide]triethylammonium salt.

### [Synthesis Example 2] Li⁺, [(F₂PO)₂N]⁻

The present synthesis example used a reaction described in Non Patent Literature 1.

A 150 mL autoclave was charged with 60 g of tetrahydrofuran and 6.0 g (36.0 mmol) of lithium hexamethyldisilazane, cooled to 5°C with ice water, and 7.9 g (76.0 mmol) of phosphoryl fluoride was introduced with spending 2 hours. After the introduction, the mixture was stirred at 5°C for 4 hours. The obtained reaction solution contained a [bis(difluorophosphoryl)imide]lithium salt and trimethylsilyl fluoride as a by-product. By concentrating the reaction solution and removing trimethylsilyl fluoride, the [bis(difluorophosphoryl)imide]lithium salt was obtained.

### [Synthesis Example 3] K⁺, [(CF₃SO₂)N(POCl₂)]⁻

The present synthesis example used a reaction described in Example 11 of Patent Literature 3.

A 50 mL glass reactor including a stirrer and a thermometer was charged with 25 g of tetrahydrofuran as a reaction solvent and 2.6 g (10 mmol) of K[CF₃SO₂NSi(CH₃)₃] in a nitrogen atmosphere, and 1.53 g (10 mmol) of phosphorus oxychloride was added dropwise with spending 10 minutes. After the dropwise addition was completed, a temperature of the solution was raised to 50°C, and stirring was continued for 20 hours to perform the reaction. The obtained reaction solution contained a [(trifluoromethanesulfonyl)(dichlorophosphoryl)imide]potassium salt and trimethylsilyl chloride which is a by-product. By concentrating the reaction solution and removing trimethylsilyl chloride, the [(trifluoromethanesulfonyl)(dichlorophosphoryl)imide]potassium salt was obtained.

### [Synthesis Example 4] Li⁺, [(FSO₂)N(POF₂)]⁻

Except that ethyl methyl carbonate (EMC) was used instead of tetrahydrofuran as the reaction solvent, Li[FSO₂NSi(CH₃)₃] was used instead of K[CF₃SO₂NSi(CH₃)₃], and POF₂Cl was used instead of phosphorus oxychloride, the reaction was carried out in the same manner as in Synthesis Example 3. The obtained reaction solution contained a [(fluorosulfonyl)(difluorophosphoryl)imide]lithium salt and trimethylsilyl chloride which is a by-product. By concentrating the reaction solution and removing trimethylsilyl chloride, an ethyl methyl carbonate solution of the [(fluorosulfonyl)(difluorophosphoryl)imide]lithium salt was obtained.

### [Evaluation]

An SUS304 test piece was immersed and held (stored) in each of solutions in the following Examples and Comparative Examples, and changes in a content of iron atoms (content of Fe) in the solutions before and after storage were measured.

The contents of Fe in the solution before and after the holding are measured using an ICP Optical Emission Spectrometer (Agilent 5110 ICP-OES).

### [Production of Test Piece]

As a test piece, a test piece (size: 20 mm x 15 mm x 3 mm) made of SUS304, which is austenitic stainless steel, was immersed in 30% nitric acid at 50°C for 1 hour, washed with pure water, and a dried test piece (SUS304 test piece) was used.

### [Example A-1]

The [bis(difluorophosphoryl)imide]triethylammonium salt obtained in Synthesis Example 1 was dissolved in dimethyl carbonate (DMC) with a water content of 10 mass ppm or less to obtain a solution with a concentration of 20% by mass. The solution was transferred to a fluororesin container (manufactured by Flon Industry, PFA container), and the SUS304 test piece was further placed therein to be completely immersed. After maintaining this state at 25°C for 3 months or at 45°C for 6 months, the content of Fe in the solution was determined. Results are shown in Table 1 together with the content of Fe in the solution before the test piece was immersed.

### [Example A-2]

The [bis(difluorophosphoryl)imide]lithium salt obtained in Synthesis Example 2 was dissolved in EMC having a water content of 10 mass ppm or less to obtain a solution with a concentration of 30% by mass. The solution was transferred to the PFA container, and the SUS304 test piece was further placed therein to be completely immersed. After maintaining this state at 25°C for 3 months or at 45°C for 6 months, the content of Fe in the solution was determined. Results are shown in Table 1 together with the content of Fe in the solution before the test piece was immersed.

### [Example A-3]

The [(trifluoromethanesulfonyl)(dichlorophosphoryl)imide]potassium salt obtained in Synthesis Example 3 was dissolved in diethyl carbonate (DEC) with a water content of 10 mass ppm or less to obtain a solution with a concentration of 10% by mass. The solution was transferred to the PFA container, and the SUS304 test piece was further placed therein to be completely immersed. After maintaining this state at 25°C for 3 months or at 45°C for 6 months, the content of Fe in the solution was determined. Results are shown in Table 1 together with the content of Fe in the solution before the test piece was immersed.

### [Example A-4]

The EMC solution of the [(fluorosulfonyl)(difluorophosphoryl)imide]lithium salt obtained in Synthesis Example 4 was further concentrated under reduced pressure to obtain a solution with a concentration of 30% by mass. The solution was transferred to the PFA container, and the SUS304 test piece was further placed therein to be completely immersed. After maintaining this state at 25°C for 3 months or at 45°C for 6 months, the content of Fe in the solution was determined. Results are shown in Table 1 together with the content of Fe in the solution before the test piece was immersed.

### [Example A-5]

By adding ethylene carbonate (EC) with a water content of 10 mass ppm or less to the EMC solution of the [(fluorosulfonyl)(difluorophosphoryl)imide]lithium salt obtained in Synthesis Example 4, and partially distilling off EMC by vacuum concentration under reduced pressure, a solution was obtained in which a concentration of [(fluorosulfonyl)(difluorophosphoryl)imide]lithium salt was 30% by mass, a content of EMC in a nonaqueous solvent was 60% by volume, and a content of EC in the nonaqueous solvent was 40% by volume. The solution was transferred to the PFA container, and the SUS304 test piece was further placed therein to be completely immersed. After maintaining this state at 25°C for 3 months or at 45°C for 6 months, the content of Fe in the solution was determined. Results are shown in Table 1 together with the content of Fe in the solution before the test piece was immersed.

### [Comparative Example A-1]

The [bis(difluorophosphoryl)imide]triethylammonium salt obtained in Synthesis Example 1 was dissolved in propylene carbonate (PC) with a water content of 10 mass ppm or less to obtain a solution with a concentration of 20% by mass. The same evaluation as in Example A-1 was performed by using the solution. Results are shown in Table 1 together with the content of Fe in the solution before the test piece was immersed.

### [Comparative Example A-2]

The [bis(difluorophosphoryl)imide]lithium salt obtained in Synthesis Example 2 was dissolved in EC having a water content of 10 mass ppm or less to obtain a solution with a concentration of 30% by mass. The same evaluation as in Example A-1 was performed by using the solution. Results are shown in Table 1 together with the content of Fe in the solution before the test piece was immersed.

### [Comparative Example A-3]

The [(trifluoromethanesulfonyl)(dichlorophosphoryl)imide]potassium salt obtained in Synthesis Example 3 was dissolved in EC with a water content of 10 mass ppm or less to obtain a solution with a concentration of 10% by mass. The same evaluation as in Example A-1 was performed by using the solution. Results are shown in Table 1 together with the content of Fe in the solution before the test piece was immersed.

### [Comparative Example A-4]

EC with a water content of 10 mass ppm or less was added to the EMC solution of the [(fluorosulfonyl)(difluorophosphoryl)imide]lithium salt obtained in Synthesis Example 4, and the mixture was concentrated under reduced pressure to distill off EMC, thereby obtaining an EC solution with a concentration of 30% by mass. The same evaluation as in Example A-1 was performed by using the solution. Results are shown in Table 1 together with the content of Fe in the solution before the test piece was immersed.

### [Comparative Example A-5]

By adding EC with a water content of 10 mass ppm or less to the EMC solution of the [(fluorosulfonyl)(difluorophosphoryl)imide]lithium salt obtained in Synthesis Example 4, and partially distilling off EMC by vacuum concentration under reduced pressure, a solution was obtained in which a concentration of [(fluorosulfonyl)(difluorophosphoryl)imide]lithium salt was 30% by mass, a content of EMC in a nonaqueous solvent was 40% by volume, and a content of EC in the nonaqueous solvent was 60% by volume. The solution was transferred to the PFA container, and the SUS304 test piece was further placed therein to be completely immersed. After maintaining this state at 25°C for 3 months or at 45°C for 6 months, the content of Fe in the solution was determined. Results are shown in Table 1 together with the content of Fe in the solution before the test piece was immersed.

**[Table 1]**

| Table 1 | Compound represented by Formula [1] | Species of Nonaqueous solvent (dielectric constant at 25°C) and content [% by volume] in nonaqueous solvent | Content [mass ppm] of Fe in solution before immersing SUS304 test piece | Content [mass ppm] of Fe in solution after immersing SUS304 test piece at 25°C for 3 months | Content [mass ppm] of Fe in solution after immersing SUS304 test piece at 45°C for 6 months |
|---|---|---|---|---|---|
| Example A-1 | [Bis(difluorophosphoryl)imide]triethylammonium salt | DMC (3) 100% by volume | < 2 | < 2 | < 2 |
| Example A-2 | [Bis(difluorophosphoryl)imide] lithium salt | EMC (3) 100% by volume | < 2 | < 2 | < 2 |
| Example A-3 | [(Trifluoromethanesulfonyl)(dichlorophosphoryl)imide]potassium salt | DEC (3) 100% by volume | < 2 | < 2 | 4 |
| Example A-4 | [(Fluorosulfonyl)(difluorophosphoryl)imide]lithium salt | EMC (3) 100% by volume | < 2 | < 2 | < 2 |
| Example A-5 | [(Fluorosulfonyl)(difluorophosphoryl)imide]lithium salt | EMC (3) 60% by volume | < 2 | < 2 | 4 |
| | | EC (90) 40% by volume | | | |
| Comparative Example A-1 | [Bis(difluorophosphoryl)imide]triethylammonium salt | PC (65) 100% by volume | < 2 | 25 | 107 |
| Comparative Example A-2 | [Bis(difluorophosphoryl)imide] lithium salt | EC (90) 100% by volume | < 2 | 49 | 133 |
| Comparative Example A-3 | [(Trifluoromethanesulfonyl)(dichlorophosphoryl)imide]potassium salt | EC (90) 100% by volume | < 2 | 55 | 227 |
| Comparative Example A-4 | [(Fluorosulfonyl)(difluorophosphoryl)imide]lithium salt | EC (90) 100% by volume | < 2 | 79 | 211 |
| Comparative Example A-5 | [(Fluorosulfonyl)(difluorophosphoryl)imide]lithium salt | EMC (3) 40% by volume | < 2 | 8 | 28 |
| | | EC (90) 60% by volume | | | |

### In Table 1, "< 2" indicates less than 2 mass ppm.

### [Example A-6]

The [bis(difluorophosphoryl)imide]triethylammonium salt obtained in Synthesis Example 1 was dissolved in DMC with a water content of 10 mass ppm or less to obtain a solution with a concentration of 1% by mass. The solution was transferred to the PFA container, and the SUS304 test piece was further placed therein to be completely immersed. After maintaining this state at 45°C for 6 months, the content of Fe in the solution was determined. Results are shown in Table 2 together with the content of Fe in the solution before the test piece was immersed.

### [Example A-7]

The [bis(difluorophosphoryl)imide] lithium salt obtained in Synthesis Example 2 was dissolved in EMC having a water content of 10 mass ppm or less to obtain a solution with a concentration of 1% by mass. The solution was transferred to the PFA container, and the SUS304 test piece was further placed therein to be completely immersed. After maintaining this state at 45°C for 6 months, the content of Fe in the solution was determined. Results are shown in Table 2 together with the content of Fe in the solution before the test piece was immersed.

### [Example A-8]

The [(trifluoromethanesulfonyl)(dichlorophosphoryl)imide]potassium salt obtained in Synthesis Example 3 was dissolved in DEC with a water content of 10 mass ppm or less to obtain a solution with a concentration of 1% by mass. The solution was transferred to the PFA container, and the SUS304 test piece was further placed therein to be completely immersed. After maintaining this state at 45°C for 6 months, the content of Fe in the solution was determined. Results are shown in Table 2 together with the content of Fe in the solution before the test piece was immersed.

### [Example A-9]

EMC with a water content of 10 mass ppm or less was added to the EMC solution of the [(fluorosulfonyl)(difluorophosphoryl)imide]lithium salt obtained in Synthesis Example 4 to obtain a solution with a concentration of 1% by mass. The solution was transferred to the PFA container, and the SUS304 test piece was further placed therein to be completely immersed. After maintaining this state at 45°C for 6 months, the content of Fe in the solution was determined. Results are shown in Table 2 together with the content of Fe in the solution before the test piece was immersed.

### [Example A-10]

EMC with a water content of 10 mass ppm or less and EC with a water content of 10 mass ppm or less was added to the EMC solution of the [(fluorosulfonyl)(difluorophosphoryl)imide]lithium salt obtained in Synthesis Example 4 to obtain a solution in which a concentration of [(fluorosulfonyl)(difluorophosphoryl)imide]lithium salt was 1% by mass, a content of EMC in a nonaqueous solvent was 60% by volume, and a content of EC in the nonaqueous solvent was 40% by volume. The solution was transferred to the PFA container, and the SUS304 test piece was further placed therein to be completely immersed. After maintaining this state at 45°C for 6 months, the content of Fe in the solution was determined. Results are shown in Table 2 together with the content of Fe in the solution before the test piece was immersed.

### [Comparative Example A-6]

The [bis(difluorophosphoryl)imide]triethylammonium salt obtained in Synthesis Example 1 was dissolved in PC with a water content of 10 mass ppm or less to obtain a solution with a concentration of 1% by mass. The solution was transferred to the PFA container, and the SUS304 test piece was further placed therein to be completely immersed. The same evaluation as in Example A-6 was performed by using the solution. Results are shown in Table 2 together with the content of Fe in the solution before the test piece was immersed.

### [Comparative Example A-7]

The [bis(difluorophosphoryl)imide]lithium salt obtained in Synthesis Example 2 was dissolved in EC having a water content of 10 mass ppm or less to obtain a solution with a concentration of 1% by mass. The solution was transferred to the PFA container, and the SUS304 test piece was further placed therein to be completely immersed. The same evaluation as in Example A-6 was performed by using the solution. Results are shown in Table 2 together with the content of Fe in the solution before the test piece was immersed.

### [Comparative Example A-8]

The [(trifluoromethanesulfonyl)(dichlorophosphoryl)imide]potassium salt obtained in Synthesis Example 3 was dissolved in EC with a water content of 10 mass ppm or less to obtain a solution with a concentration of 1% by mass. The solution was transferred to the PFA container, and the SUS304 test piece was further placed therein to be completely immersed. The same evaluation as in Example A-6 was performed by using the solution. Results are shown in Table 2 together with the content of Fe in the solution before the test piece was immersed.

### [Comparative Example A-9]

EC with a water content of 10 mass ppm or less was added to the EC solution of the [(fluorosulfonyl)(difluorophosphoryl)imide]lithium salt obtained in Comparative Example 4 to obtain an EC solution with a concentration of 1% by mass. The same evaluation as in Example A-6 was performed by using the solution. Results are shown in Table 2 together with the content of Fe in the solution before the test piece was immersed.

### [Comparative Example A-10]

EMC with a water content of 10 mass ppm or less and EC with a water content of 10 mass ppm or less was added to the EMC solution of the [(fluorosulfonyl)(difluorophosphoryl)imide]lithium salt obtained in Synthesis Example 4 to obtain a solution in which a concentration of [(fluorosulfonyl)(difluorophosphoryl)imide]lithium salt was 1% by mass, a content of EMC in a nonaqueous solvent was 40% by volume, and a content of EC in the nonaqueous solvent was 60% by volume. The same evaluation as in Example A-6 was performed by using the solution. Results are shown in Table 2 together with the content of Fe in the solution before the test piece was immersed.

**[Table 2]**

| Table 2 | Compound represented by Formula [1] | Species of Nonaqueous solvent (dielectric constant at 25°C) and content [% by volume] in nonaqueous solvent | Content [mass ppm] of Fe in solution before immersing SUS304 test piece | Content [mass ppm] of Fe in solution after immersing SUS304 test piece at 45°C for 6 months |
|---|---|---|---|---|
| Example A-6 | [Bis(difluorophosphoryl)imide]triethylammonium salt | DMC (3) 100% by volume | < 2 | < 2 |
| Example A-7 | [Bis(difluorophosphoryl)imide]lithium salt | EMC (3) 100% by volume | < 2 | < 2 |
| Example A-8 | [(Trifluoromethanesulfonyl)(dichlorophosphoryl)imide]potassium salt | DEC (3) 100% by volume | < 2 | < 2 |
| Example A-9 | [(Fluorosulfonyl)(difluorophosphoryl)imide] lithium salt | EMC (3) 100% by volume | < 2 | < 2 |
| Example A-10 | [(Fluorosulfonyl)(difluorophosphoryl)imide] lithium salt | EMC (3) 60% by volume | < 2 | 2 |
| | | EC (90) 40% by volume | | |
| Comparative Example A-6 | [Bis(difluorophosphoryl)imide]triethylammonium salt | PC (65) 100% by volume | < 2 | 11 |
| Comparative Example A-7 | [Bis(difluorophosphoryl)imide]lithium salt | EC (90) 100% by volume | < 2 | 14 |
| Comparative Example A-8 | [(Trifluoromethanesulfonyl)(dichlorophosphoryl)imide]potassium salt | EC (90) 100% by volume | < 2 | 21 |
| Comparative Example A-9 | [(Fluorosulfonyl)(difluorophosphoryl)imide] lithium salt | EC (90) 100% by volume | < 2 | 15 |
| Comparative Example A-10 | [(Fluorosulfonyl)(difluorophosphoryl)imide] lithium salt | EMC (3) 40% by volume | < 2 | 6 |
| | | EC (90) 60% by volume | | |

In Table 2, "< 2" indicates less than 2 mass ppm.

### [Evaluation]

An SUS304 test piece was immersed and held (stored) in each of nonaqueous electrolyte solutions in the following Examples and Comparative Examples, and changes in the content of iron atoms (content of Fe) in the nonaqueous electrolyte solutions before and after holding were measured.

### [Example B-1]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC:DMC = 25:45:30 (water 10 mass ppm or less in any one), and the concentration of the [bis(difluorophosphoryl)imide] triethylammonium salt obtained in Synthesis Example 1 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

### [Example B-2]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC:DMC = 25:45:30 (water 10 mass ppm or less in any one), and the concentration of the [bis(difluorophosphoryl)imide]lithium salt obtained in Synthesis Example 2 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

### [Example B-3]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC:DMC = 25:45:30 (water 10 mass ppm or less in any one), and the concentration of the [(trifluoromethanesulfonyl)(dichlorophosphoryl)imide]potassium salt obtained in Synthesis Example 3 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

### [Example B-4]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC:DMC = 25:45:30 (water 10 mass ppm or less in any one), and the concentration of the [(fluorosulfonyl)(difluorophosphoryl)imide]lithium salt obtained in Synthesis Example 4 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

### [Comparative Example B-1]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC = 60:40 (water 10 mass ppm or less in both), and the concentration of the [bis(difluorophosphoryl)imide] triethylammonium salt obtained in Synthesis Example 1 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

### [Comparative Example B-2]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC = 60:40 (water 10 mass ppm or less in both), and the concentration of the [bis(difluorophosphoryl)imide]lithium salt obtained in Synthesis Example 2 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

### [Comparative Example B-3]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC = 60:40 (water 10 mass ppm or less in any one), and the concentration of the [(trifluoromethanesulfonyl)(dichlorophosphoryl)imide]potassium salt obtained in Synthesis Example 3 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

### [Comparative Example B-4]

In a glove box with a dew point of -60°C or lower, with an internal temperature kept below 40°C, a nonaqueous electrolyte solution was prepared such that a concentration of LiPF₆ was 1.0 mol/L, and a volume ratio of the nonaqueous solvent was EC:EMC = 60:40 (water 10 mass ppm or less in any one), and the concentration of the [(fluorosulfonyl)(difluorophosphoryl)imide]lithium salt obtained in Synthesis Example 4 was 3% by mass based on a total amount of the nonaqueous electrolyte solution. The nonaqueous electrolyte solution was transferred to the PFA container, and the SUS304 test piece was further placed therein to be completely immersed. After maintaining this state at 45°C for 6 months, the content of Fe in the solution was determined. Results are shown in Table 3 together with the content of Fe in the nonaqueous electrolyte solution before the test piece was immersed.

**[Table 3]**

| Table 3 | Compound represented by Formula [1] | Species of Nonaqueous solvent (dielectric constant at 25°C) and content [% by volume] in nonaqueous solvent | Content [mass ppm] of Fe in electrolytic solution before immersing SUS304 test piece | Content [mass ppm] of Fe in electrolytic solution after immersing SUS304 test piece at 45°C for 6 months |
|---|---|---|---|---|
| Example B-1 | [Bis(difluorophosphoryl)imide]triethylammonium salt | DMC (3) 30% by volume | < 2 | < 2 |
| | | EMC (3) 45% by volume | | |
| | | EC (90) 25% by volume | | |
| Example B-2 | [Bis(difluorophosphoryl)imide]lithium salt | DMC (3) 30% by volume | < 2 | < 2 |
| | | EMC (3) 45% by volume | | |
| | | EC (90) 25% by volume | | |
| Example B-3 | [(Trifluoromethanesulfonyl)(dichlorophosphoryl)imide]potassium salt | DMC (3) 30% by volume | < 2 | < 2 |
| | | EMC (3) 45% by volume | | |
| | | EC (90) 25% by volume | | |
| Example B-4 | [(Fluorosulfonyl)(difluorophosphoryl)imide]lithium salt | DMC (3) 30% by volume | < 2 | < 2 |
| | | EMC (3) 45% by volume | | |
| | | EC (90) 25% by volume | | |
| Comparative Example B-1 | [Bis(difluorophosphoryl)imide]triethylammonium salt | EMC (3) 40% by volume | < 2 | 10 |
| | | EC (90) 60% by volume | | |
| Comparative Example B-2 | [Bis(difluorophosphoryl)imide]lithium salt | EMC (3) 40% by volume | < 2 | 9 |
| | | EC (90) 60% by volume | | |
| Comparative Example B-3 | [(Trifluoromethanesulfonyl)(dichlorophosphoryl)imide]potassium salt | EMC (3) 40% by volume | < 2 | 18 |
| | | EC (90) 60% by volume | | |
| Comparative Example B-4 | [(Fluorosulfonyl)(difluorophosphoryl)imide]lithium salt | EMC (3) 40% by volume | < 2 | 13 |
| | | EC (90) 60% by volume | | |

In Table 3, "< 2" indicates less than 2 mass ppm.

As is clear from Tables 1 to 3, it has been found that the nonaqueous solution according to the present disclosure and the nonaqueous solution used in the holding method according to the present disclosure were less likely to cause corrosion even when the nonaqueous solution came into contact with austenitic stainless steel.

### [Example C-1]

The nonaqueous electrolyte solution obtained in Example B-2 was used to produce a nonaqueous battery including a positive electrode whose current collector was made of SUS304 as the wetted member containing austenitic stainless steel.

### (Production of Positive Electrode)

LiNi_{0.8}Co_{0.1}Mn_{0.1}O₂ (92% by mass) as a positive electrode active material, acetylene black (4.5% by mass) as a conductive agent, and PVDF (3.5% by mass) as a binder were mixed, N-methyl-2-pyrrolidone as a solvent was further added thereto such that the amount of N-methyl-2-pyrrolidone was 55% by mass with respect to a total mass of the positive electrode active material, the conductive agent, and the binder, to prepare a slurry solution. The slurry solution was applied onto an SUS304 foil, which is a positive electrode current collector, and dried at 150°C for 12 hours to obtain a test NCM811 positive electrode in which a positive electrode active material layer was formed on the current collector.

### (Production of Negative Electrode)

To 85% by mass of artificial graphite powder, 7% by mass of nanosilicon, 3% by mass of conductive material (HS-100), 2% by mass of carbon nanofiber (VGCF), 2% by mass of styrene-butadiene rubber, 1% by mass of sodium carboxymethylcellulose, and water were mixed to prepare a slurry solution. The slurry solution was applied onto a copper foil, which is a negative electrode current collector, and dried at 100°C for 12 hours to obtain a test silicon-containing graphite negative electrode in which a negative electrode active material layer was formed on the current collector.

The above positive electrode and negative electrode were disposed to face with each other, and a polyethylene separator permeated with the nonaqueous electrolyte solution obtained in Example B-2 was placed between the positive electrode and the negative electrode, so that a 50 mAh cell with an aluminum laminate exterior was assembled.

When a charge and discharge test was conducted by using the above cell, it could be confirmed that there was no adverse effect of corrosion of the electrode current collector (SUS304) and that the cell could be charged and discharged without any problem.

Therefore, it has been found that even if austenitic stainless steel was included as a wetted member, a nonaqueous battery that does not easily cause corrosion to the member could be obtained.

### INDUSTRIAL APPLICABILITY

The present disclosure allows for providing a nonaqueous solution that does not easily cause corrosion even when the nonaqueous solution comes into contact with austenitic stainless steel, a holding method thereof, and a nonaqueous battery in which corrosion of a wetted member even containing the austenitic stainless steel hardly occurs.

Although the present disclosure has been described in detail and with reference to specific examples, it will be apparent to those skilled in the art that various changes and modifications can be made without departing from the spirit and scope of the present disclosure.

The present application is based on a Japanese Patent Application No. 2021-152601 filed on September 17, 2021, and the contents of which are incorporated herein by reference.

## Claims

1. A nonaqueous solution, comprising:
a nonaqueous solvent; and
an imidic acid or imidic acid salt represented by the following Formula [1],
wherein the nonaqueous solution is in contact with austenitic stainless steel and a content of the nonaqueous solvent having a dielectric constant (at 25°C) of 10 or less in the nonaqueous solvent is 50% by volume to 100% by volume, 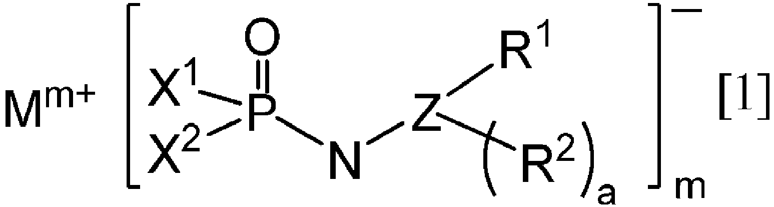
where, X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group;
Z represents -P(=O)<, -S(=O)₂-, or -C(=O)-; a is 0 or 1; when Z represents -P(=O)<, a is 1, and when Z represents -S(=O)₂- or -C(=O)-, a is 0;
R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group; and
M^{m+} represents a proton, an alkali metal cation, an alkaline earth metal cation, or an onium cation, and m represents a valence of the cation.

2. The nonaqueous solution according to claim 1,
wherein the nonaqueous solvent having the dielectric constant (at 25°C) of 10 or less is at least one selected from the group consisting of ethyl methyl carbonate, dimethyl carbonate, diethyl carbonate, methyl acetate, ethyl acetate, ethyl propionate, 1,2-dimethoxyethane, and diethylene glycol dimethyl ether.

3. The nonaqueous solution according to claim 1 or 2,
wherein a concentration of the imidic acid or imidic acid salt represented by Formula [1] in the nonaqueous solution is 1% by mass to 90% by mass.

4. A holding method, comprising:
holding a nonaqueous solution in a wetted member containing austenitic stainless steel,
wherein the nonaqueous solution contains a nonaqueous solvent and an imidic acid or imidic acid salt represented by the following Formula [1], and a content of the nonaqueous solvent having a dielectric constant (at 25°C) of 10 or less in the nonaqueous solvent is 50% by volume to 100% by volume, 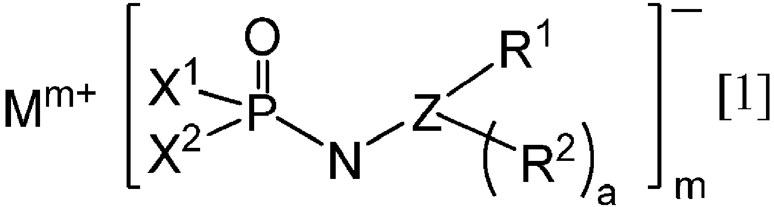
where, X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group;
Z represents -P(=O)<, -S(=O)z-, or -C(=O)-; a is 0 or 1; when Z represents -P(=O)<, a is 1, and when Z represents -S(=O)₂- or -C(=O)-, a is 0;
R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group; and
M^{m+} represents a proton, an alkali metal cation, an alkaline earth metal cation, or an onium cation, and m represents a valence of the cation.

5. The holding method according to claim 4,
wherein the nonaqueous solvent having the dielectric constant (at 25°C) of 10 or less is at least one selected from the group consisting of ethyl methyl carbonate, dimethyl carbonate, diethyl carbonate, methyl acetate, ethyl acetate, ethyl propionate, 1,2-dimethoxyethane, and diethylene glycol dimethyl ether.

6. The holding method according to claim 4 or 5,
wherein a concentration of the imidic acid or imidic acid salt represented by Formula [1] in the nonaqueous solution is 1% by mass to 90% by mass.

7. A nonaqueous battery, comprising:
a wetted member containing austenitic stainless steel; and
a nonaqueous electrolyte solution in contact with the wetted member,
wherein the nonaqueous electrolyte solution comprises a nonaqueous solvent and an imidic acid or imidic acid salt represented by the following Formula [1], and a content of the nonaqueous solvent having a dielectric constant (at 25°C) of 10 or less in the nonaqueous solvent is 50% by volume to 100% by volume, 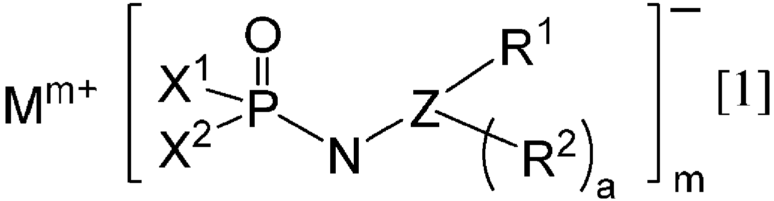
where, X¹ and X² are each independently represent a chlorine atom, a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from a fluorine atom, an oxygen atom, a nitrogen atom, and an unsaturated bond may be present in the organic group;
Z represents -P(=O)<, -S(=O)₂-, or -C(=O)-; a is 0 or 1; when Z represents -P(=O)<, a is 1, and when Z represents -S(=O)₂- or -C(=O)-, a is 0;
R¹ and R² each independently represent a chlorine atom, a fluorine atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from a fluorine atom, an oxygen atom, and an unsaturated bond may be present in the organic group; and
M^{m+} represents a proton, an alkali metal cation, an alkaline earth metal cation, or an onium cation, and m represents a valence of the cation.

8. The nonaqueous battery according to claim 7,
wherein the nonaqueous solvent having the dielectric constant (at 25°C) of 10 or less is at least one selected from the group consisting of ethyl methyl carbonate, dimethyl carbonate, diethyl carbonate, methyl acetate, ethyl acetate, ethyl propionate, 1,2-dimethoxyethane, and diethylene glycol dimethyl ether.

9. The nonaqueous battery according to claim 7 or 8,
wherein a concentration of the imidic acid or imidic acid salt represented by Formula [1] in the nonaqueous electrolyte solution is 0.1% by mass to 10% by mass.
